(19) Europäisches Patentamt
European Patent Office
Office européen des brevets

(11) **EP 4 047 695 A1**

(12) **EUROPÄISCHE PATENTANMELDUNG**

(43) Veröffentlichungstag:
**24.08.2022  Patentblatt 2022/34**

(21) Anmeldenummer: **21158807.4**

(22) Anmeldetag: **23.02.2021**

(51) Internationale Patentklassifikation (IPC):
*H01M 6/40* (2006.01)   *H01M 4/04* (2006.01)
*H01M 4/42* (2006.01)   *H01M 10/04* (2006.01)
*H01M 50/528* (2021.01)   *H01M 50/46* (2021.01)

(52) Gemeinsame Patentklassifikation (CPC):
**H01M 4/0414; H01M 4/42; H01M 6/40;**
**H01M 10/0436; H01M 50/46; H01M 50/528;**
H01M 2220/30

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder:
• **VARTA Microbattery GmbH**
  **73479 Ellwangen Jagst (DE)**
• **Elmeric GmbH**
  **72414 Rangendingen (DE)**

• **Bayer AG**
  **51373 Leverkusen (DE)**

(72) Erfinder:
• **FINK, Werner**
  **72414 Rangendingen (DE)**
• **KREBS, Martin**
  **73494 Rosenberg (DE)**
• **LANG, Sabrina**
  **72119 Ammerbuch (DE)**

(74) Vertreter: **Ostertag & Partner Patentanwälte mbB**
  **Azenbergstraße 35**
  **70174 Stuttgart (DE)**

(54) **BATTERIE, FUNKETIKETT UND HERSTELLUNGSVERFAHREN**

(57)    Eine Batterie (100), die sich zur Stromversorgung eines Funketiketts (119) eignet, umfasst eine erste und eine zweite als Schichtstapel ausgebildete Einzelzelle (114, 115) mit jeweils einer negativen Elektrode (107b, 107c) und einer positiven Elektrode (108b, 108c) und einem Separator (117b, 117c), der zwischen der positiven Elektrode und der negativen Elektrode angeordnet ist, mehrere separate elektrische Leiter (101, 102, 103), von denen ein erster Leiter (101) eine der Elektroden (107b) der ersten Einzelzelle (114) elektrisch kontaktiert, ein zweiter Leiter (102) zwecks Ausbildung einer Serienschaltung die nicht von dem ersten Leiter (101) kontaktierte Elektrode (108b) der ersten Einzelzelle (114) mit einer entgegengesetzt gepolten Elektrode (107c) der zweiten Einzelzelle (115) elektrisch verbindet und ein dritter Leiter (103) die nicht von dem zweiten Leiter (102) kontaktierte Elektrode (108c) der zweiten Einzelzelle (115) elektrisch kontaktiert, und ein erstes und ein zweites Substrat (109a, 109b), zwischen denen die Einzelzellen (114, 115) und die Leiter (101, 102, 103) angeordnet sind. Der erste und der dritte Leiter (101, 103) sind hierbei beanstandet voneinander auf dem ersten Substrat (109a) angeordnet, während der zweite Leiter (102) auf dem zweiten Substrat (109b) angeordnet ist. Die elektrisch miteinander verbundenen Elektroden (108b, 107a) der ersten und derzweiten Einzelzelle (114, 115) sind in Form von Schichten und nebeneinander auf dem zweiten Substrat (109b) angeordnet, wobei sie jeweils einen Teilbereich des zweiten Leiters (102) überdecken und durch einen Spalt (110) voneinander getrennt sind. Die nicht über den zweiten Leiter (102) miteinander verbundenen Elektroden (107b, 108a) sind in Form von Schichten auf der dem ersten Substrat (109a) angeordnet, wobei die mit dem ersten Leiter (101) in elektrischem Kontakt stehende Elektrode (107b) zumindest einen Teilbereich des ersten Leiters (101) und die mit dem dritten Leiter (103) in elektrischem Kontakt stehende Elektrode (108c) zumindest einen Teilbereich des dritten Leiters (103) überdeckt. Die gleichfalls in Form von Schichten vorliegenden Separatoren (117b, 117c) der Einzelzellen (114, 115) stehen jeweils mit einer ihrer Seiten in flächigem Kontakt mit einer der elektrisch miteinander verbundenen Elektroden (108b, 107c) und mit der anderen ihrer Seiten in flächigem Kontakt mit einer der elektrisch nicht miteinander verbundenen Elektroden (107b, 108c).

EP 4 047 695 A1

*Fig. 1*

2

**Beschreibung**

ANWENDUNGSGEBIET UND STAND DER TECHNIK

Die nachfolgend beschriebene Erfindung betrifft eine Batterie und ein Funketikett, das von der Batterie mit elektrischem Strom versorgt wird. Weiterhin betrifft die Erfindung ein Verfahren zur Herstellung der Batterie.

Funketiketten können zur Verfolgung von Produkten aller Art dienen, beispielsweise von Pharmazeutika und von Pflanzenschutzmitteln. Solche Funketiketten sind beispielsweise in der WO 2019/145224 A1 beschrieben. Sie umfassen in der Regel eine Energieversorgungseinheit, mindestens einen Sensor, eine Steuereinheit, einen Datenspeicher, in dem eine eindeutige Produktkennung gespeichert ist, und eine Sende- und/oder Empfangseinheit. Mit Hilfe des Sensors kann eine Zustandsinformation betreffend das Produkt ermittelt werden, beispielsweise betreffend den Öffnungszustand seiner Verpackung. Die Steuereinheit kann dann die Sende- und/oder Empfangseinheit dazu veranlassen, die Zustandsinformation und die Produktkennung an einen Datenempfänger zu senden. Idealerweise sollte die Energieversorgungseinheit die hierfür benötigte Energie über einen Zeitraum von mehreren Monaten liefern können, wobei über diesen Zeitraum mindestens 50 eingehende und abgehende Datenübertragungen möglich sein sollten.

Bei der Sende- und/oder Empfangseinheit kann es sich grundsätzlich um eine beliebige Datenübertragungseinrichtung handeln, beispielsweise sind Datenübertragungen nach dem Wi-Fi Standard (IEEE 802.11) und dem Bluetooth Standard (IEEE 802.15.1) möglich. Um eine weltweite Verfolgung von Produkten zu gewährleisten, ist es allerdings zweckmäßig, für die Datenübertragung Mobilfunknetze oder andere bestehende Funknetzwerke zu nutzen.

Mobilfunknetze decken heute weite Teile der bewohnten Welt ab, sie sind daher für die weltweite Verfolgung von Produkten besonders gut geeignet. Mobilfunkchips stellen hinsichtlich ihres Energieverbrauchs allerdings immer noch hohe Anforderungen. Dies gilt auch für Mobilfunkchips neuerer Generation, die nach dem LTE-Standard (LTE = Long Term Evolution) funken. In Abhängigkeit des gewählten Funkprotokolls müssen zumindest für kurze Zeitfenster Peakströme von bis zu 400 mA zur Verfügung stehen.

Für einen universellen Einsatz müssen Funketiketten und damit auch ihre Energieversorgungseinheiten möglichst platzsparend und günstig herzustellen sein. Darüber hinaus sind Umweltverträglichkeit und Sicherheit für alle Produkte im Masseneinsatz ein wichtiger Parameter. Unter anderem aus diesen Gründen werden in der WO 2019/145224 A1 gedruckte Batterien als Energieversorgungseinheiten in Erwägung gezogen.

Die bislang bekannten gedruckten Batterien genügen den oben skizzierten Anforderungen allerdings nicht oder allenfalls teilweise. So sind beispielsweise die in der US 2010/081049 A1 beschriebenen Batterien nicht dazu in der Lage, einen Peakstrom der genannten Größenordnung zu liefern. Sie weisen eine zu hohe Impedanz auf.

Der vorliegend beschriebenen Erfindung lag die Aufgabe zugrunde, eine Energieversorgungseinheit bereitzustellen, die insbesondere für die Versorgung der Sende- und/oder Empfangseinheiten von Funketiketten mit elektrischem Strom optimiert ist, insbesondere auch für Sende- und/oder Empfangseinheiten, die nach dem LTE-Standard arbeiten.

Zur Lösung dieser Aufgabe schlägt die Erfindung die Batterie mit den in Anspruch 1 genannten Merkmalen vor. Auch das Funketikett mit den Merkmalen des Anspruchs 14 und das Verfahren gemäß Anspruch 15 sind Gegenstand der Erfindung. Weiterbildungen der Erfindung sind Gegenstand von Unteransprüchen.

Der Begriff "Batterie" meinte ursprünglich mehrere in Serie geschaltete elektrochemische Zellen. So wird dies auch im Rahmen der vorliegenden Anmeldung gehandhabt. Die erfindungsgemäße Batterie umfasst stets mindestens zwei elektrochemische Zellen (Einzelzellen), die elektrisch in Reihe geschaltet sind, so dass sich ihre Spannungen addieren.

AUFGABE UND LÖSUNG

In Übereinstimmung mit der der Erfindung zugrunde liegenden Aufgabe dient die erfindungsgemäße Batterie bevorzugt zur Versorgung einer Sende- und/oder Empfangseinheit mit einem elektrischen Strom von in der Spitze $\geq$ 400 mA. Sie kann daher unter anderen nach dem LTE-Standard arbeitende Mobilfunkchips mit elektrischer Energie versorgen. Grundsätzlich ist sie aber auch für andere Anwendungen geeignet.

Die Batterie weist stets die unmittelbar folgenden Merkmale a. bis g. auf:

   a. Sie umfasst eine erste und eine zweite als Schichtstapel ausgebildete Einzelzelle mit jeweils

   •   einer negativen Elektrode und

   •   einer positiven Elektrode und

   •   einem Separator, der zwischen der positiven Elektrode und der negativen Elektrode angeordnet ist,

b. sie umfasst mehrere separate elektrische Leiter, von denen

- ein erster Leiter eine der Elektroden der ersten Einzelzelle elektrisch kontaktiert,

- ein zweiter Leiter zwecks Ausbildung einer Serienschaltung die nicht von dem ersten Leiter kontaktierte Elektrode der ersten Einzelzelle mit einer entgegengesetzt gepolten Elektroden der zweiten Einzelzelle elektrisch verbindet und

- ein dritter Leiter die nicht von dem zweiten Leiter kontaktierte Elektrode der zweiten Einzelzelle elektrisch kontaktiert, und

c. sie umfasst ein erstes und ein zweites Substrat, zwischen denen die Einzelzellen und die elektrischen Leiter angeordnet sind,

wobei

d. der erste und der dritte Leiter beanstandet voneinander auf einer dem zweiten Substrat zugewandten Oberfläche des ersten Substrats angeordnet sind, und der zweite Leiter auf einer dem ersten Substrat zugewandten Oberfläche des zweiten Substrats angeordnet ist,

e. die elektrisch miteinander verbundenen Elektroden der ersten und der zweiten Einzelzelle in Form von Schichten und nebeneinander auf der dem ersten Substrat zugewandten Oberfläche des zweiten Substrats angeordnet sind, wobei sie jeweils einen Teilbereich des zweiten Leiters überdecken und durch einen Spalt voneinander getrennt sind,

f. die nicht über den zweiten Leiter miteinander verbundenen Elektroden in Form von Schichten auf der dem zweiten Substrat zugewandten Oberfläche des ersten Substrats angeordnet sind, wobei die mit dem ersten Leiter in elektrischem Kontakt stehende Elektrode zumindest einen Teilbereich des ersten Leiters und die mit dem dritten Leiter in elektrischem Kontakt stehende Elektrode zumindest einen Teilbereich des dritten Leiters überdeckt, und

g. die gleichfalls in Form von Schichten vorliegenden Separatoren der Einzelzellen jeweils mit einer ihrer Seiten in flächigem Kontakt mit einer der elektrisch miteinander verbundenen Elektroden und mit der anderen ihrer Seiten in flächigem Kontakt mit einer der elektrisch nicht miteinander verbundenen Elektroden stehen.

Die Batterie umfasst somit mindestens zwei in Reihe geschaltete Einzelzellen, nämlich die erste und die zweite Einzelzelle. In einigen bevorzugten Ausführungsformen umfasst die Batterie genau zwei in Reihe geschaltete Einzelzellen, wobei sie über den ersten und den dritten Leiter mit einer elektrischen Last verbunden werden kann. Die Batterie weist somit bevorzugt eine Nennspannung auf, die sich durch Addition der Spannungen der ersten und der zweiten Einzelzelle ergibt.

Nicht mit Elektrodenmaterial beschichtete Bereiche des ersten und des dritten elektrischen Leiters können als Pole der Batterie mit den zwei in Reihe geschalteten Einzelzellen dienen.

In einer ersten, besonders bevorzugten Ausführungsform zeichnet sich die erfindungsgemäße Batterie durch eine Kombination der unmittelbar folgenden zusätzlichen Merkmale a. bis d. aus:

a. Sie umfasst neben der ersten und der zweiten Einzelzelle eine zusätzliche dritte Einzelzelle mit einer negativen Elektrode, einer positiven Elektrode, und einem zwischen der negativen Elektrode und der positiven Elektrode angeordneten Separator;

b. die drei Einzelzellen sind in Reihe geschaltet, so dass sich ihre Spannungen addieren;

c. der dritte elektrische Leiter steht hierzu mit einer Elektrode der dritten Einzelzelle in elektrischem Kontakt, wobei die durch diesen Leiter elektrisch verbundenen Elektroden eine entgegengesetzte Polarität aufweisen; und

d. die Batterie umfasst einen vierten elektrischen Leiter, der die nicht von dem dritten elektrischen Leiter kontaktierte Elektrode der dritten Einzelzelle elektrisch kontaktiert.

In dieser Ausführungsform umfasst die Batterie somit mindestens drei Einzelzellen, nämlich die erste, die zweite und die dritte Einzelzelle. In einigen bevorzugten Ausführungsformen umfasst die Batterie genau drei in Reihe geschaltete Einzelzellen, wobei die Batterie bevorzugt über den ersten und den vierten Leiter mit einer elektrischen Last verbunden werden kann. Die Batterie weist somit bevorzugt eine Nennspannung auf, die sich durch Addition der Spannungen der ersten und der zweiten und der dritten Einzelzelle ergibt.

Nicht mit Elektrodenmaterial beschichtete Bereiche des ersten und des vierten elektrischen Leiters können als Pole der Batterie mit den drei in Reihe geschalteten Einzelzellen dienen.

In einer Weiterbildung der ersten, besonders bevorzugten Ausführungsform zeichnet sich die erfindungsgemäße Batterie durch mindestens eines der unmittelbar folgenden zusätzlichen Merkmale a. bis d. aus:

a. Der vierte elektrische Leiter ist beabstandet von dem zweiten Leiter auf der dem ersten Substratzugewandten Oberfläche des zweiten Substrats angeordnet.

b. Die mit dem dritten elektrischen Leiter in Kontakt stehende Elektrode der dritten Einzelzelle ist in Form einer Schicht auf dem ersten Substrat angeordnet, wobei sie einen Teilbereich des dritten Leiters überdeckt und durch einen Spalt von derweiteren auf dem Leiter angeordneten Elektrode getrennt ist.

c. Die nicht mit dem dritten elektrischen Leiter in elektrischem Kontakt stehende Elektrode der dritten Einzelzelle ist in Form einer Schicht auf der dem ersten Substrat zugewandten Oberfläche des zweiten Substrats angeordnet und überdeckt dabei zumindest einen Teilbereich des vierten elektrischen Leiters.

d. Der gleichfalls als Schicht ausgebildete Separator der dritten Einzelzelle steht mit einer seiner Seiten in flächigem Kontakt mit der auf dem vierten elektrischen Leiter angeordneten Elektrode der dritten Einzelzelle und mit der anderen seiner Seiten in flächigem Kontakt mit der auf dem dritten elektrischen Leiter angeordneten Elektrode der dritten Einzelzelle.

Besonders bevorzugt sind die unmittelbar vorstehenden Merkmale a. bis d. in Kombination miteinander realisiert.

In einer zweiten, besonders bevorzugten Ausführungsform zeichnet sich die erfindungsgemäße Batterie durch eine Kombination der unmittelbar folgenden zusätzlichen Merkmale a. bis d. aus:

a. Sie umfasst neben der ersten und der zweiten und der dritten Einzelzelle eine zusätzliche vierte Einzelzelle mit einer negativen Elektrode, einer positiven Elektrode, und dem zwischen der negativen Elektrode und der positiven Elektrode angeordneten Separator.

b. Die vier Einzelzellen sind in Reihe geschaltet, so dass sich ihre Spannungen addieren.

c. Hierzu steht der dritte elektrische Leiter elektrisch mit einer Elektrode der dritten Einzelzelle in Kontakt, wobei die durch diesen Leiter elektrisch verbundenen Elektroden eine entgegengesetzte Polarität aufweisen, und der erste elektrische Leiter steht elektrisch mit einer Elektrode der vierten Einzelzelle in Kontakt, wobei die durch diesen Leiter elektrisch verbundenen Elektroden gleichfalls eine entgegengesetzte Polarität aufweisen.

d. Die Batterie umfasst einen fünften elektrischen Leiter, der die verbleibende Elektrode der vierten Einzelzelle elektrisch kontaktiert.

In dieser Ausführungsform umfasst die Batterie somit mindestens vier Einzelzellen, nämlich die erste, die zweite, die dritte und die vierte Einzelzelle. In einigen bevorzugten Ausführungsformen umfasst die Batterie genau vier in Reihe geschaltete Einzelzellen, wobei die Batterie bevorzugt über den vierten und den fünften Leiter mit einer elektrischen Last verbunden werden kann. Die Batterie weist somit bevorzugt eine Nennspannung auf, die sich durch Addition der Spannungen der ersten und der zweiten und der dritten und der vierten Einzelzelle ergibt.

Nicht mit Elektrodenmaterial beschichtete Bereiche des vierten und des fünften elektrischen Leiters können als Pole der Batterie mit den vier in Reihe geschalteten Einzelzellen dienen.

In einer Weiterbildung der zweiten, besonders bevorzugten Ausführungsform zeichnet sich die erfindungsgemäße Batterie durch mindestens eines der unmittelbar folgenden zusätzlichen Merkmale a. bis g. aus:

a. Der fünfte elektrische Leiter ist in Form einer Schicht und beabstandet von dem zweiten und dem vierten elektrischen Leiter auf der dem ersten Substrat zugewandten Oberfläche des zweiten Substrats angeordnet.

b. Die mit dem dritten elektrischen Leiter in Kontakt stehende Elektrode der dritten Einzelzelle ist in Form einer Schicht auf dem ersten Substrat angeordnet, wobei sie einen Teilbereich des dritten Leiters überdeckt und durch einen Spalt von der weiteren auf dem dritten elektrischen Leiter angeordneten Elektrode getrennt ist.

c. Die mit dem vierten elektrischen Leiter in Kontakt stehende Elektrode der dritten Einzelzelle ist in Form einer Schicht auf der dem ersten Substrat zugewandten Oberfläche des zweiten Substrats angeordnet und überdeckt dabei zumindest einen Teilbereich des vierten elektrischen Leiters.

d. Die mit dem ersten elektrischen Leiter in Kontakt stehende Elektrode der vierten Einzelzelle ist in Form einer Schicht auf dem ersten Substrat angeordnet, wobei sie einen Teilbereich des ersten Leiters überdeckt und durch einen Spalt von der weiteren auf dem ersten elektrischen Leiter angeordneten Elektrode getrennt ist.

e. Die elektrisch nicht dem ersten elektrischen Leiter in Kontakt stehende Elektrode der vierten Einzelzelle ist in Form einer Schicht auf der dem ersten Substrat zugewandten Oberfläche des zweiten Substrats angeordnet und überdeckt dabei zumindest einen Teilbereich des fünften elektrischen Leiters.

f. Der gleichfalls als Schicht ausgebildete Separator der dritten Einzelzelle steht mit einer seiner Seiten in flächigem Kontakt mit der auf dem vierten elektrischen Leiter angeordneten Elektrode der dritten Einzelzelle und mit der anderen seiner Seiten in flächigem Kontakt mit der auf dem dritten elektrischen Leiter angeordneten Elektrode der dritten Einzelzelle.

g. Der gleichfalls als Schicht ausgebildete Separator der vierten Einzelzelle steht mit einer seiner Seiten in flächigem Kontakt mit der auf dem ersten elektrischen Leiter angeordneten Elektrode der vierten Einzelzelle und mit der anderen seiner Seiten in flächigem Kontakt mit der auf dem fünften elektrischen Leiter angeordneten Elektrode der vierten Einzelzelle.

Besonders bevorzugt sind die unmittelbar vorstehenden Merkmale a. bis g. in Kombination miteinander realisiert.

In einer dritten, besonders bevorzugten Ausführungsform umfasst die Batterie n weitere Einzelzellen, die mit der ersten bis vierten Einzelzelle in Reihe geschaltet sind, wobei n bevorzugt eine ganze Zahl im Bereich von 1 bis 100 ist. Die Batterie weist somit bevorzugt eine Nennspannung auf, die sich durch Addition der Spannungen der ersten bis vierten und der $n$ weiteren Einzelzellen ergibt.

Die $n$ weiteren Einzelzellen sind hierbei bevorzugt ausgebildet wie die erste bis vierte Einzelzelle. Sie weisen jeweils schichtförmige Elektroden und einen schichtförmigen Separator auf, wobei der Separator mit einer seiner Seiten in flächigem Kontakt mit einer der Elektroden der jeweiligen n'ten Einzelzelle und mit der anderen seiner Seiten in flächigem Kontakt mit der anderen der Elektroden steht.

Für jede zusätzliche Einzelzelle umfasst die Batterie bevorzugt einen weiteren elektrischen Leiter, dereine der Elektroden der zusätzlichen Einzelzelle kontaktiert.

Es ist bevorzugt, dass die als Schichtstapel ausgebildeten Einzelzellen einer Batterie jeweils die gleiche Nennspannung und die gleiche Nennkapazität aufweisen.

Aus der obigen Beschreibung ergibt sich, dass die Einzelzellen der erfindungsgemäßen Batterie jeweils einen Stapel aus schichtförmigen Elektroden und einem schichtförmigen Separator umfassen. Eine der Seiten der Separatoren weist hierbei jeweils eine erste Kontaktfläche zur positiven Elektrode der jeweiligen Einzelzelle auf, die andere Seite parallel dazu eine zweite Kontaktfläche zur negativen Elektrode. Bevorzugt überlagern die Kontaktflächen einander in Blickrichtung senkrecht zu dem jeweiligen Separator in einem Überlagerungsbereich A, in welchem eine Gerade senkrecht zu dem Separator beide Kontaktflächen schneidet.

Bei identischer Flächendimensionen entgegengesetzt gepolter Elektroden und nicht versetzter Anordnung von positiver und negativer Elektrode innerhalb eines Stapels entspricht die Größe des Überlagerungsbereichs A bevorzugt exakt der Größe der Elektroden.

Die gestapelte Anordnung der Elektroden und des Separators hat sich gegenüber einer koplanaren Anordnung wie im Falle der Elektroden der in der US 2010/081049 A1 beschriebenen Zelle als überlegen erwiesen. Die Strombelastbarkeit von Zellen mit gestapelten Elektroden ist deutlich höher, da die Ionen, die bei Lade- und Entladevorgängen zwischen den Elektroden hin- und herwandern, im Mittel deutlich kürzere Wege zurücklegen müssen. Im Bereich des Überlagerungsbereichs A entspricht die kürzeste Entfernung zwischen den Elektroden in vielen Fällen näherungsweise der Dicke des zwischen der positiven und der negativen Elektrode angeordneten Separators.

Es ist besonders bevorzugt, dass über den zweiten Leiter und im Fall der zweiten oder der dritten besonders bevorzugten Ausführungsform auch über weitere auf dem zweiten Substrat angeordnete Leiter elektrisch verbundene Elektroden mit ihrer dem zweiten Substrat zugewandten Seite vollflächig mit dem jeweiligen Leiter in Kontakt stehen. Die dem zweiten Substrat zugewandte Seite von Elektroden, die über einen auf dem zweiten Substrat angeordneten Leiter elektrisch verbunden sind, weist also bevorzugt keine Bereiche auf, die nicht unmittelbar mit diesem Leiter in Kontakt stehen.

Gleiches gilt im Fall der zweiten oder der dritten besonders bevorzugten Ausführungsform auch für die über den ersten und/oder den dritten und/oder sonstige auf dem ersten Substrat angeordnete Leiter, über welche Elektroden elektrisch verbunden sind. Die dem ersten Substrat zugewandte Seite von Elektroden, die über einen auf dem ersten Substrat angeordneten Leiter elektrisch verbunden sind, weist also bevorzugt keine Bereiche auf, die nicht unmittelbar mit diesem Leiter in Kontakt stehen.

In einer in allen Ausführungsformen bevorzugten Variante umfassen die Zellstapel der erfindungsgemäßen Batterie zwei Elektroden, eine positive und eine negative Elektrode, die nicht über einen elektrischen Leiter mit einer Elektrode einer benachbarten Einzelzelle elektrisch verbunden sind und über welche die Gesamtspannung der Batterie abgegriffen werden kann. Im Falle der zweiten, besonders bevorzugten Ausführungsform handelt es sich hierbei beispielsweise um eine der Elektroden der dritten und eine der Elektroden der vierten Einzelzelle, die mit dem vierten und dem fünften Leiter in elektrischem Kontakt stehen.

Es ist besonders bevorzugt, dass solche Elektroden, die mit einem Leiter auf dem ersten oder dem zweiten Substrat in elektrischem Kontakt stehen, über diesen Leiter aber nicht mit einer Elektrode umgekehrter Polarität in elektrischem Kontakt stehen, vollflächig mit diesem Leiter in Kontakt stehen. Die dem jeweiligen Substrat zugewandte Seite dieser Elektroden weist also bevorzugt keine Bereiche auf, die nicht unmittelbar mit diesem Leiter in Kontakt stehen.

Es ist allerdings grundsätzlich möglich, nicht mit anderen Elektroden elektrisch verbundene Elektroden über mehr als einen elektrischen Leiter zu kontaktieren. So könnte beispielsweise im Falle der zweiten, besonders bevorzugten Ausführungsform der fünfte elektrische Leiter in zwei oder mehr getrennte Teilbereiche unterteilt sein, die nebeneinander auf dem jeweiligen Substrat angeordnet sind. In diesem Fall wäre es bevorzugt, die jeweilige Elektrode mittelsderzwei oder mehr getrennten Teilbereiche möglichst großflächig zu kontaktieren, um dem Ziel der vollflächigen Kontaktierung möglichst nahe zu kommen. Über die Teilbereiche abgegriffene Ströme können durch eine entsprechende elektrische Verbindung zwischen den Teilbereichen wieder zusammengeführt werden.

Es ist weiterhin besonders bevorzugt, dass Elektroden, die mit einem Leiter auf dem ersten oder dem zweiten Substrat in elektrischem Kontakt stehen, über diesen Leiter aber nicht mit einer Elektrode umgekehrter Polarität in elektrischem Kontakt stehen, mit ihrer dem jeweiligen Substrat abgewandten Seite vollflächig mit den Separatoren der jeweils beteiligten Einzelzellen in Kontakt stehen. Die dem jeweiligen Substrat abgewandte Seite der Elektroden weist also bevorzugt keine Bereiche auf, die nicht mit dem jeweiligen Separator unmittelbar in Kontakt stehen.

In bevorzugten Weiterbildungen der Erfindung zeichnet sich die erfindungsgemäße Batterie durch mindestens eines der unmittelbar folgenden Merkmale a. bis d. aus:

a. Die elektrischen Leiter, die zwei Elektroden elektrisch miteinander verbinden, bilden auf der Oberfläche des jeweiligen Substrats eine elektrisch leitende Fläche, die größer ist als die Fläche, welche die elektrisch verbundenen Elektroden auf der Oberfläche einnehmen.

b. Diese elektrisch leitende Fläche und die darüber elektrisch verbundenen Elektroden überlagern in Blickrichtung senkrecht zu den Elektroden und dem Leiter in einem Überlagerungsbereich B, wobei der Überlagerungsbereich B bevorzugt mindestens 80 %, besonders bevorzugt mindestens 90 %, insbesondere 100 % der Fläche der elektrisch verbundenen Elektroden beträgt.

c. Die elektrisch leitende Fläche auf dem jeweiligen Substrat umfasst mindestens einen Bereich, der nicht vom Überlagerungsbereich B umfasst ist und in dem keine Überlagerung mit den verbundenen Elektroden besteht.

d. Der Bereich, der nicht von dem Überlagerungsbereich umfasst ist, erstreckt sich über den Spalt, der die verbundenen Elektroden voneinander trennt.

Bevorzugt sind die unmittelbar vorstehenden Merkmale a. und b. sowie die Merkmale c. und d. in Kombination miteinander realisiert. Besonders bevorzugt sind die Merkmale a. bis d. in Kombination miteinander realisiert.

Beispielsweise im Fall derzweiten, besonders bevorzugten Ausführungsform handelt es sich bei den Leitern gemäß den unmittelbar vorstehenden Merkmalen a. bis d. um den ersten, den zweiten und den dritten Leiter.

Mit dem Überlagerungsbereich B ist hierbei der Bereich gemeint, in welchem eine Gerade senkrecht zu den Elektroden sowohl die Elektroden als auch den elektrisch verbindenden Leiter schneidet. Besonders bevorzugt stehen die über den Leiter elektrisch verbundenen Elektroden somit vollflächig mit diesem elektrischen Leiter in Kontakt.

Die Ränder der zwei elektrisch miteinander verbundenen Elektroden definieren die Flächen, die die Elektroden auf dem jeweiligen Substrat einnehmen. Bei jeder der zwei elektrisch verbundenen Elektroden ist zumindest ein Teilabschnitt des jeweiligen Rands der korrespondierenden entgegengesetzt gepolten Elektrode zugewandt. Unter dem der entgegengesetzt gepolten Elektrode "zugewandten Teilabschnitt" soll hierbei der Abschnitt des Randes einer Elektrode verstanden werden, in dem sich der Rand durch eine Gerade mit dem Rand der entgegengesetzt gepolten Elektrode verbinden lässt, ohne dabei die Ränder der Elektroden zu schneiden. Es ist bevorzugt, dass diese Abschnitte der Ränder auch den Spalt zwischen den Elektroden definieren. Präziser, bevorzugt ist der Spalt, durch den die zwei Elektroden voneinander getrennt sind, definiert als die größtmögliche, nicht mit Elektrodenmaterial bedeckte Fläche auf dem jeweiligen Substrat, die von Geraden zwischen den Rändern eingeschlossen werden kann, welche die Ränderderzwei Elektroden verbinden, ohne dabei einen der Ränder zu schneiden.

In weiteren bevorzugten Weiterbildungen der Erfindung zeichnet sich die erfindungsgemäße Batterie durch mindestens eines der unmittelbar folgenden Merkmale a. und b. aus:

> a. Die elektrischen Leiter, die nur mit einer der Elektroden in elektrischem Kontakt stehen und diese nicht mit einer Elektrode umgekehrter Polarität verbinden, bilden auf der Oberfläche des jeweiligen Substrats eine elektrisch leitende Fläche, die größer ist als die Fläche, welche die elektrisch kontaktierte Elektrode auf der Oberfläche einnimmt.
> b. Diese Leiter und die jeweils kontaktierte Elektrode überlagern in Blickrichtung senkrecht zu den Elektroden und dem Leiter in einem Überlagerungsbereich C, wobei der Überlagerungsbereich C bevorzugt mindestens 80 %, besonders bevorzugt mindestens 90 %, insbesondere 100 % der Fläche der Elektroden beträgt.

Besonders bevorzugt sind die unmittelbar vorstehenden Merkmale a. und b. in Kombination miteinander realisiert.

Beispielsweise im Fall derzweiten, besonders bevorzugten Ausführungsform handelt es sich bei diesen Leitern um den vierten und den fünften Leiter.

Im Fall von nur zwei Einzelzellen kann auch nur der zweite Leiter derart ausgestaltet sein.

Mit dem Überlagerungsbereich C ist hier der Bereich gemeint, in welchem eine Gerade senkrecht zu den Elektroden sowohl die Elektroden als auch den elektrisch verbindenden Leiter schneidet. Besonders bevorzugt stehen die über den Leiter elektrisch verbundenen Elektroden somit vollflächig mit diesem elektrischen Leiter in Kontakt.

Eine nicht 100 %ige Überlagerung der Elektroden mit den Leitern kann beispielsweise resultieren, wenn, wie oben erwähnt, der oder die Leiter in zwei oder mehr getrennte Teilbereiche unterteilt sind.

In einer besonders bevorzugten Weiterbildung der Erfindung zeichnet sich die erfindungsgemäße Batterie durch das unmittelbar folgende Merkmal a. aus:

> a. Die elektrischen Leiter, die zwei Elektroden elektrisch miteinander verbinden, sind zumindest bereichsweise, vorzugsweise über die gesamte Fläche, die sie auf dem jeweiligen Substrat einnehmen, als durchgängige elektrisch leitende Schicht ausgebildet.

Dies gilt bevorzugt sowohl für die Bereiche der elektrischen Leiter, die in dem Überlagerungsbereich B mit den über die elektrischen Leiter elektrisch verbundenen Elektroden überlagern, als auch für den Spalt zwischen den verbundenen Elektroden.

Bezogen auf die zweite, besonders bevorzugte Ausführungsform bedeutet dies, dass der erste, der zweite und der dritte elektrische Leiter bevorzugt jeweils als durchgängige elektrische leitende Schicht ausgebildet sind. Bevorzugt berühren die Elektroden somit nirgendwo das Substrat, auf dem sie angeordnet sind. Sie liegen stattdessen bevorzugt unmittelbar auf dem jeweiligen elektrischen Leiter auf.

In einer weiteren, besonders bevorzugten Weiterbildung der Erfindung zeichnet sich die erfindungsgemäße Batterie durch das unmittelbar folgende Merkmal a. aus:

> a. Die elektrischen Leiter, die zwei Elektroden elektrisch miteinander verbinden, sind zumindest bereichsweise, vorzugsweise über die gesamte Fläche, die sie auf dem jeweiligen Substrat einnehmen, aus Linien und / oder Bahnen gebildet, wobei bevorzugt mindestens 10 % und bevorzugt maximal 90 %, weiter bevorzugt maximal 75 %, weiter bevorzugt maximal 50 %, besonders bevorzugt maximal 25 %, der von den jeweiligen elektrischen Leitern eingenommenen Fläche des jeweiligen Substrats von den Linien und / oder Bahnen abgedeckt sind.

Auch dies gilt bevorzugt sowohl für die Bereiche der elektrischen Leiter, die in dem Überlagerungsbereich B mit den über die elektrischen Leiter elektrisch verbundenen Elektroden überlagern, als auch für den Spalt zwischen den verbundenen Elektroden.

Bevorzugt sind die aus Linien und / oder Bahnen parallel und/oder in gekreuzter Anordnung ausgerichtet.

Zwischen den elektrisch miteinander verbundenen Elektroden ist das jeweilige Substrat, auf der der Leiter angeordnet ist, bevorzugt vollflächig mit dem jeweiligen elektrischen Leiter bedeckt. Dies dient dazu, dass der Querschnitt des elektrischen Leiters innerhalb des Spalts so groß wie möglich ist, was sich wiederum positiv auf die Impedanz der erfindungsgemäßen Batterie auswirkt.

Selbstverständlich sind auch Ausführungsformen der erfindungsgemäßen Batterie realisierbar, bei denen einer der elektrischen Leiter, die zwei Elektroden elektrisch miteinander verbinden, zumindest bereichsweise, vorzugsweise über die gesamte Fläche, die er auf dem jeweiligen Substrat einnimmt, als durchgängige elektrisch leitende Schicht ausgebildet ist, während ein anderer der elektrischen Leiter, die zwei Elektroden elektrisch miteinander verbinden,

8

zumindest bereichsweise, vorzugsweise über die gesamte Fläche, die er auf dem jeweiligen Substrat einnimmt, aus Linien und / oder Bahnen gebildet ist, die in der beschriebenen parallelen und/oder gekreuzten Anordnung ausgerichtet sein können, wobei bevorzugt mindestens 10 % und bevorzugt maximal 90 %, weiter bevorzugt maximal 75 %, weiter bevorzugt maximal 50 %, besonders bevorzugt maximal 25 %, der von dem jeweiligen elektrischen Leiter eingenommenen Fläche des jeweiligen Substrats von dem Leiter überdeckt sind.

Es ist besonders bevorzugt, dass sich die erfindungsgemäße Batterie durch mindestens eines der unmittelbar folgenden zusätzlichen Merkmale a. bis i. auszeichnet:

a. Die Elektroden sind rechteckig oder in Form von Streifen ausgebildet.

b. Der Spalt zwischen elektrisch verbundenen Elektroden weist eine im Wesentlichen gleichbleibende Breite auf.

c. Entgegengesetzt gepolte Elektroden der Einzelzellen nehmen auf den Substraten jeweils die gleiche Fläche ein.

d. Die elektrisch miteinander verbundenen Elektroden sowie die elektrisch nicht miteinander Elektroden sind jeweils parallel zueinander ausgerichtet.

e. Gleich gepolte Elektroden der Einzelzellen weisen im Wesentlichen identische Dimensionen auf.

f. Die Elektroden weisen

- eine Länge im Bereich von 1 cm bis 25, bevorzugt von 5 cm bis 20 cm, und

- eine Breite im Bereich von 0,5 bis 10 cm, bevorzugt von 1 cm bis 5 cm, auf.

g. Der Spalt weist

- eine Länge im Bereich von 1 cm bis 25, bevorzugt von 5 cm bis 20 cm, und

- eine Breite im Bereich von 0,1 cm bis 2 cm, bevorzugt von 0,2 cm bis 1 cm, auf.

h. Die elektrischen Leiter weisen eine Dicke im Bereich von 2 $\mu$m bis 250 $\mu$m, bevorzugt von 2 $\mu$m bis 100 $\mu$m, besonders bevorzugt von 2 $\mu$m bis 25 $\mu$m, weiter bevorzugt von 5 $\mu$m bis 10 $\mu$m, auf.

i. Die Elektroden weisen eine Dicke im Bereich von 10 $\mu$m bis 350 $\mu$m auf.

Bevorzugt sind die unmittelbar vorstehenden Merkmale a. bis i. in Kombination miteinander realisiert.

Die positive und die negative Elektrode weisen jeweils besonders bevorzugt eine Dicke im Bereich von 10 $\mu$m bis zu 250 $\mu$m auf. Häufig wird die positive Elektrode etwas dicker ausgebildet als die negative Elektrode, da letztere in vielen Fällen eine höhere Energiedichte aufweist. So kann es in einigen Anwendungsfällen bevorzugt sein, die negative Elektrode als Schicht mit einer Dicke von 30 $\mu$m bis 150 $\mu$m und die positive Elektrode als Schicht mit einer Dicke von 180 bis 350 $\mu$m zu bilden. Durch die Einstellung der Dicken lassen sich die Kapazitäten von positiver und negativer Elektrode balancieren. Es ist diesbezüglich bevorzugt, dass die positive Elektrode gegenüber der negativen Elektrode überdimensioniert wird.

Weiterhin ist es besonders bevorzugt, dass sich die erfindungsgemäße Batterie durch mindestens eines der unmittelbar folgenden zusätzlichen Merkmale a. und b. auszeichnet:

a. Sie umfasst ein Gehäuse, das die Einzelzellen umschließt und eine erste und eine zweite Gehäuseinnenseite umfasst, wobei das erste und das zweite Substrat Bestandteil des Gehäuses sind und die erste Gehäuseinnenseite eine Oberfläche des ersten Substrats und die zweite Gehäuseinnenseite eine Oberfläche des zweiten Substrats ist.

b. Bei dem ersten und dem zweiten Substrat handelt es sich um Folien oder um Bestandteile einer Folie.

Auch hier sind die unmittelbar vorstehenden Merkmale a. und b. bevorzugt in Kombination miteinander realisiert.

Es ist bevorzugt, dass die erfindungsgemäße Batterie einschließlich des Gehäuses eine maximale Dicke im Bereich von wenigen Millimetern, besonders bevorzugt im Bereich von 0,5 mm bis 5 mm, weiter bevorzugt im Bereich von 1 mm bis 3 mm, aufweist. Ihre sonstigen Dimensionen hängen von der Anzahl der elektrisch verschalteten Einzelzellen und deren Dimensionen ab. Eine Batterie mit vier seriell verschalteten Einzelzellen kann beispielsweise eine Länge von 5 bis 20 cm und eine Breite von 4 bis 18 cm aufweisen.

In einigen besonders bevorzugten Ausführungsformen handelt es sich bei der erfindungsgemäßen Batterie um eine gedruckte Batterie. Unter einer gedruckten Batterie soll vorliegend eine Batterie verstanden werden, bei der zumindest die Elektroden, gegebenenfalls auch die elektrischen Leiter, in einigen bevorzugten Ausführungsformen auch der Separator und gegebenenfalls weitere Funktionsteile, durch Drucken einer Druckpaste auf einen Träger, insbesondere mittels eines Siebdruckverfahrens, gebildet sind. Bevorzugt sind die Elektroden und die elektrischen Leiter, insbesondere der erste und der zweite elektrische Leiter, gedruckt.

Entsprechend zeichnet sich die erfindungsgemäße Batterie bevorzugt durch mindestens eines der folgenden Merkmale a. bis c. aus:

a. Die Elektroden der Einzelzellen sind durch ein Druckverfahren gebildet.

b. Die elektrischen Leiter sind durch ein Druckverfahren gebildet.

c. Die Separatoren der Einzelzellen sind durch ein Druckverfahren gebildet.

Besonders bevorzugt sind die unmittelbar vorstehenden Merkmale a. bis c. bevorzugt in Kombination miteinander realisiert.

Aus elektrochemischer Sicht ist die vorliegende Erfindung grundsätzlich nicht beschränkt. Bei den Einzelzellen kann es sich sowohl um Zellen mit einem organischen Elektrolyten handeln, beispielsweise um Lithium-Ionen-Zellen, als auch um Zellen mit einem wässrigen Elektrolyten.

Besonders bevorzugt zeichnen sich die Einzelzellen der erfindungsgemäßen Batterie durch mindestens eines der folgenden Merkmale a. und b. aus:

a. Die negativen Elektroden der Einzelzellen umfassen als Elektrodenaktivmaterial partikuläres metallisches Zink oder eine partikuläre metallische Zinklegierung.

b. Die positiven Elektroden der Einzelzellen umfassen als Elektrodenaktivmaterial ein partikuläres Metalloxid, insbesondere partikuläres Manganoxid.

Bei den Einzelzellen der erfindungsgemäßen Batterie handelt es sich also bevorzugt um Zink-Braunstein-Zellen.

In einer alternativen bevorzugten Ausführungsform handelt es sich bei den Einzelzellen der erfindungsgemäßen Batterie um Zink-Silberoxid-Zellen. Deren negative Elektroden umfassen als Elektrodenaktivmaterial partikuläres metallisches Zink oder eine partikuläre metallische Zinklegierung, während ihre positiven Elektroden als Elektrodenaktivmaterial partikuläres Silberoxid umfassen.

In allen Fällen ist das partikuläre metallische Zink oder die partikuläre metallische Zinklegierung in den negativen Elektroden der Einzelzellen, bezogen auf das Gesamtgewicht der festen Bestandteile der negativen Elektroden, bevorzugt in einem Anteil im Bereich von 40 Gew.-% bis 99 Gew.-%, insbesondere von 40 Gew.-% bis 80 Gew.-%, enthalten.

Die Wahl eines elektrochemischen Systems mit einer zinkhaltigen negativen Elektrode ist vor allem der geforderten Sicherheit geschuldet. Systeme mit zinkbasierten negativen Elektroden benötigen einen wässrigen Elektrolyten und sind damit nicht brennbar. Darüber hinaus ist Zink umweltverträglich und billig.

Um einer erfindungsgemäßen Batterie mit Einzelzellen mit zinkhaltigen negativen Elektroden die geforderte Strombelastbarkeit zu verleihen, ist es vorteilhaft, mindestens eines der unmittelbar folgenden Merkmale a. bis d. zu realisieren:

a. Die positiven Elektroden der Einzelzellen enthalten in bevorzugt homogener Durchmischung neben dem Elektrodenaktivmaterial mindestens ein Leitfähigkeitsadditiv zur Optimierung der elektrischen Leitfähigkeit der positiven Elektroden und/oder ein elastisches Bindemittel oder Bindemittelgemisch.

b. Das partikuläre Metalloxid ist, bezogen auf das Gesamtgewicht der festen Bestandteile der positiven Elektroden, vorzugsweise in einem Anteil von 10 Gew.-% bis 90 Gew.-% in den positiven Elektroden enthalten.

c. Die positiven Elektroden der Einzelzellen enthalten das elastische Bindemittel oder Bindemittelgemisch, bezogen auf das Gesamtgewicht der festen Bestandteile der positiven Elektroden, in einem Anteil von 1 Gew.-% bis 25 Gew.-%.

d. Die positiven Elektroden der Einzelzellen enthalten das mindestens eine Leitfähigkeitsadditiv, bezogen auf das Gesamtgewicht der festen Bestandteile der positiven Elektroden, in einem Anteil von 1 Gew.-% bis 85 Gew.-%.

Besonders bevorzugt sind die unmittelbar vorstehenden Merkmale a. bis d. bevorzugt in Kombination miteinander realisiert.

Der Anteil an dem elastischen Bindemittel oder Bindemittelgemisch sollte in den positiven Elektroden bevorzugt mindestens 1 Gew.-% betragen, da es die enthaltenen Metalloxidpartikel relativ zueinander fixieren und den positiven Elektroden gleichzeitig eine gewisse Flexibilität verleihen soll. Der Anteil sollte den oben genannten Maximalanteil aber nicht überschreiten, da ansonsten die Gefahr besteht, dass die Metalloxidpartikel zumindest teilweise nicht mehr in Kontakt zueinander stehen. Innerhalb des oben genannten Bereiches ist ein Anteil im Bereich von 1 Gew.-% bis 15 Gew.-%, besonders bevorzugt von 5 Gew.-% bis 15 Gew.-%, weiter bevorzugt.

Innerhalb des oben für das partikuläre Metalloxid genannten Bereiches ist ein Anteil im Bereich von 50 Gew.-% bis 90 Gew.-% weiter bevorzugt.

Innerhalb des oben für das mindestens eine Leitfähigkeitsadditiv genannten Bereiches ist ein Anteil im Bereich von 2,5 Gew.-% bis 35 Gew.-% weiter bevorzugt.

Ein hoher Anteil des Metalloxids in den positiven Elektroden erhöht die Kapazität der Batterie. Für die Strombelastbarkeit ist der Anteil des mindestens einen Leitfähigkeitsadditivs jedoch von größerer Bedeutung als der Gesamtanteil des Metalloxids.

Grundsätzlich beziehen sich alle prozentualen Angaben zu Gewichtsanteilen von Komponenten in Elektroden in der vorliegenden Anmeldung auf das Gesamtgewicht der festen Bestandteile der jeweiligen Elektrode. Die Gewichtsanteile der jeweils beteiligten Komponenten ergänzen sich dabei auf 100 Gew.-%. Vor ihrer Ermittlung ist gegebenenfalls in den Elektroden enthaltene Feuchtigkeit zu entfernen.

Es ist im Falle einer Batterie mit Einzelzellen mit zinkhaltigen negativen Elektroden weiterhin bevorzugt, dass auch die negativen Elektroden der Einzelzellen in bevorzugt homogener Durchmischung neben dem partikulären metallischen Zink oder der partikulären metallischen Zinklegierung ein elastisches Bindemittel oder Bindemittelgemisch enthalten.

Betreffend die Wahl des geeigneten Leitfähigkeitsadditivs stehen im Rahmen der Erfindung zwei besonders bevorzugte Varianten zur Auswahl.

In einer ersten besonders bevorzugten Variante zeichnet sich die Batterie durch mindestens eines der unmittelbar folgenden zusätzlichen Merkmale a. und b. aus:

a. Die positiven Elektroden enthalten als Leitfähigkeitsadditiv mindestens ein kohlenstoffbasiertes Material, insbesondere aus der Gruppe mit Aktivkohle, Aktivkohlefaser, Carbid-abgeleiteter Kohlenstoff, Kohlenstoff-Aerogel, Graphit, Graphen und Kohlenstoffnanoröhrchen (CNTs).

b. Die positiven Elektroden enthalten das mindestens eine kohlenstoffbasierte Material in einem Anteil im Bereich von 25 Gew.-% bis 35 Gew.-% (s.o.).

In besonders bevorzugten Ausführungsformen der Batterie sind die unmittelbar vorstehenden Merkmale a. und b. in Kombination miteinander realisiert.

In dieser Variante macht man sich zu Nutzen, dass die angegebenen Leitfähigkeitsadditive nicht nur die elektrische Leitfähigkeit der positiven Elektroden erhöhen, vielmehr können sie den positiven Elektroden zusätzlich zu ihrer Faradayschen Kapazität eine Doppelschichtkapazität verleihen. Somit können für kurze Zeiträume sehr große Ströme zur Verfügung gestellt werden.

Überraschenderweise hat sich herausgestellt, dass sich ein ähnlich positiver Effekt erzielen lässt, indem den positiven Elektroden bei ihrer Herstellung über eine Elektrodenpaste Leitsalze zugefügt werden, die beim Trocknen der positiven Elektroden kristallisieren können. Bei einem späteren Tränken der Elektroden mit einem Elektrolyten können die kristallinen Leitsalze sehr schnell benetzt werden und führen zu einer besseren Durchdringung der Elektroden mit einer ionenleitenden Flüssigkeit.

Entsprechend zeichnet sich die Batterie In einer zweiten besonders bevorzugten Variante durch mindestens eines der unmittelbar folgenden zusätzlichen Merkmale a. und b. aus:

a. Die positiven Elektroden enthalten als Leitfähigkeitsadditiv mindestens ein wasserlösliches Salz.

b. Die positiven Elektroden enthalten das mindestens eine wasserlösliche Salz in einem Anteil im Bereich von 1 Gew.-% bis 25 Gew.-%.

In besonders bevorzugten Ausführungsformen der Batterie sind die unmittelbar vorstehenden Merkmale a. und b. in Kombination miteinander realisiert.

Als wasserlösliches Salz können den positiven Elektroden zum Zwecke der Verbesserung der elektrischen Leitfähigkeit insbesondere Halogenide zugesetzt werden, bevorzugt Chloride, insbesondere Zinkchlorid und/oder Ammoniumchlorid.

In einigen bevorzugten Ausführungsformen können die angeführten Varianten auch kombiniertwerden. In diesen Fällen zeichnet sich die Batterie durch eine Kombination der unmittelbar folgenden Merkmale a. und b. aus:

a. Die positiven Elektroden enthalten als erstes Leitfähigkeitsadditiv das mindestens eine kohlenstoffbasierte Material, insbesondere aus der Gruppe mit Aktivkohle, Aktivkohlefaser, Carbid-abgeleiteter Kohlenstoff, Kohlenstoff-Aerogel, Graphit, Graphen und Kohlenstoffnanoröhrchen (CNTs).

b. Die positiven Elektroden enthalten als zweites Leitfähigkeitsadditiv das mindestens eine wasserlösliche Salz.

Gegebenenfalls können auch die negativen Elektroden der Einzelzellen einen Anteil an einem Leitfähigkeitsadditiv enthalten. Da das Aktivmaterial der negativen Elektroden allerdings bereits von sich aus elektrisch leitfähig ist, ist das nicht zwingend erforderlich.

Auch betreffend die Wahl des geeigneten Bindemittels oder Bindemittelgemischs sind im Rahmen der Erfindung einige Varianten besonders bevorzugt.

In bevorzugten Ausführungsformen zeichnet sich die Batterie durch mindestens eines der unmittelbarfolgenden zusätzlichen Merkmale a. und b. aus:

a. Die negativen Elektroden der Einzelzellen enthalten als elastisches Bindemittel oder Bindemittelgemisch mindestens ein Mitglied aus der Gruppe mit Cellulose und deren Derivate, insbesondere Carboxymethylzellulose (CMC), Polyacrylate (PA), Polyacrylsäure (PAA), Polychlortrifluorethylen (PCTFE), Polyhexafluorpropylen (PHFP), Polyimide (PI), Polytetrafluorethylen (PTFE), Polytrifluorethylen (PTrFE), Polyvinylalkohol (PVA), Polyvinylidendifluorid (PVDF), Styrol-Butadien-Gummi (SBR) und Mischungen aus den vorgenannten Materialien.

b. Die positiven Elektroden der Einzelzellen enthalten als elastisches Bindemittel oder Bindemittelgemisch mindestens ein Mitglied aus der Gruppe mit Cellulose und deren Derivate, insbesondere Carboxymethylzellulose (CMC), Polyacrylate (PA), Polyacrylsäure (PAA), Polychlortrifluorethylen (PCTFE), Polyhexafluorpropylen (PHFP), Polyimide (PI), Polytetrafluorethylen (PTFE), Polytrifluorethylen (PTrFE), Polyvinylalkohol (PVA), Polyvinylidendifluorid (PVDF), Styrol-Butadien-Gummi (SBR) und Mischungen aus den vorgenannten Materialien.

In besonders bevorzugten Ausführungsformen der Batterie sind die unmittelbar vorstehenden Merkmale a. und b. in Kombination miteinander realisiert.

Besonders bevorzugt sind sowohl in den positiven als auch in den negativen Elektroden als Bindemittel oder Bindemittelgemisch eine Kombination aus einem als Elektrodenbinder geeigneten Polysaccharid, insbesondere einem Zellulosederivat, und SBR enthalten. Beispielsweise können die positiven und die negativen Elektroden 0,5 Gew.-% bis 2,5 Gew.% Carboxymethylzellulose und/oder Chitosan und 5 Gew.-% bis 10 Gew.-% SBR enthalten. Das Zellulosederivat bzw. das Chitosan dienen hierbei auch als Emulgator. Sie helfen bei der Verteilung des elastischen Bindemittels (SBR) in der Paste.

Die positiven und negativen Elektroden der Einzelzellen der erfindungsgemäßen Batterie enthalten das elastische Bindemittel oder Bindemittelgemisch, bezogen auf das Gesamtgewicht ihrer festen Bestandteile, bevorzugt in einem Anteil von 1 Gew.-% bis 25 Gew.-%.

Die Einzelzellen der erfindungsgemäßen Batterie umfassen bevorzugt einen flüssigen Elektrolyten, mit dem der Separator und die Elektroden getränkt sind. Im Falle von Einzelzellen mit Partikeln aus Zink oder einer Zinklegierung in der negativen Elektrode handelt es sich hierbei um einen wässrigen Elektrolyten.

In viele Ausführungsformen sind alkalische Elektrolyten, beispielsweise Natronlauge oder Kalilauge, gut geeignet. Wässrige Elektrolyten mit einem pH-Wert im neutralen Bereich haben allerdings den Vorteil, im Falle einer mechanischen Beschädigung der Batterie weniger gefährlich zu sein.

In einer besonders bevorzugten Ausführungsform der Erfindung zeichnen sich die Einzelzellen der erfindungsgemäßen Batterie bevorzugt durch mindestens eines der unmittelbar folgenden zusätzlichen Merkmale a. und b. aus:

a. Sie umfassen einen wässrigen Elektrolyten, der ein chloridbasiertes Leitsalz enthält,

b. Die Separatoren, die zwischen der positiven und der negativen Elektrode angeordnet sind, sind mit dem Elektrolyten getränkt.

In besonders bevorzugten Ausführungsformen der Batterie sind die unmittelbar vorstehenden Merkmale a. und b. in Kombination miteinander realisiert.

Als chloridbasiertes Leitsalz sind insbesondere Zinkchlorid und Ammoniumchlorid geeignet. Es ist bevorzugt, dass sich der pH-Wert des wässrigen Elektrolyten im neutralen oder leicht sauren Bereich bewegt.

Es wurde bereits erwähnt, dass in einigen bevorzugten Ausführungsformen die Separatoren der Einzelzellen der erfindungsgemäßen Batterie gedruckt sein können. Geeignete Druckpasten hierfür sind beispielsweise der EP 2 561564 B1 zu entnehmen.

In weiteren Ausführungsformen kann es sich bei den Separatoren aber auch um poröse Flächengebilde, beispielsweise poröse Folien oder Vliese, handeln, die zwischen den Elektroden angeordnet werden. Geeignete Flächengebilde und entsprechende Vorgehensweisen sind in der EP 3 477 727 A1 beschrieben.

Besonders bevorzugt werden als poröses Flächengebilde ein Vlies oder eine mikroporöse Kunststofffolie mit einer Dicke im Bereich von 60 bis 120 μm und einer Porosität (Verhältnis von Hohlraumvolumen zu Gesamtvolumen) im Bereich von 35 - 60 % verwendet. Das Vlies oder die Folie bestehen bevorzugt aus einem Polyolefin, beispielsweise aus Polyethylen.

Insbesondere, wenn als Separatoren poröse Flächengebilde wie die genannten Folien und Vliese eingesetzt werden, kann es bevorzugt sein, dass die Einzelzellen der erfindungsgemäßen Batterie einen gemeinsamen Separator aufweisen. So kann beispielsweise im Fall der zweiten, besonders bevorzugten Ausführungsform der erfindungsgemäßen Batterie eine poröse Folie vier voneinander separierte Bereiche aufweisen, über welche die entgegengesetzt gepolten Elektroden der vier Schichtstapel in Verbindung stehen. Bei Ausführungsformen mit zwei Einzelzellen kann die poröse Folie zwei voneinander separierte Bereiche aufweisen, über welche die entgegengesetzt gepolten Elektroden der vier Schichtstapel in Verbindung stehen. Dies kann die Produktion der erfindungsgemäßen Batterie deutlich vereinfachen.

An Stelle einerSeparator-Flüssigelektrolyt-Kombination gemäß den obigen Ausführungen kann zwischen den Elektroden grundsätzlich auch ein Festelektrolyt angeordnet werden, wie er in einer bevorzugten Ausführungsform beispielsweise in der EP 2 960 967 B1 beschrieben ist. Varianten, bei denen ein flüssiger Elektrolyt zum Einsatz kommen, sind in vielen Fällen allerdings bevorzugt.

In einigen besonders bevorzugten Ausführungsformen umfasst der wässrige Elektrolyt ein Additiv zur Erhöhung der Viskosität (Stellmittel) und/oder mineralische Füllpartikel, insbesondere in einer Menge, so dass der Elektrolyt eine pastenartige Konsistenz hat. Ein solcher Elektrolyt wird im Folgenden auch als Elektrolyt-Paste bezeichnet.

Als Stellmittel eignet sich insbesondere Siliziumdioxid. Es können zur Erhöhung der Viskosität aber auch bindende Substanzen wie Carboxymethylzellulose eingesetzt werden.

Als mineralische Füllpartikel eignen sich beispielsweise keramische Feststoffe, in Wasser nahezu oder vollständig unlösliche Salzen, Glas und Basalt und Kohlenstoff. Der Begriff "keramische Feststoffe" soll dabei sämtliche Feststoffe umfassen, die zur Herstellung keramischer Produkte dienen können, darunter silikatische Materialien wie Aluminiumsilikate, Gläser und Tonmineralien, oxidische Rohstoffe wie Siliziumdioxid, Titandioxid und Aluminiumoxid sowie nicht-oxidische Materialien wie Siliziumcarbid oder Siliziumnitrid.

Die mineralischen Füllpartikel weisen bevorzugt elektrisch isolierende Eigenschaften auf.

Der Begriff "nahezu oder vollständig unlöslich" meint im Rahmen der vorliegenden Anmeldung, dass bei Raumtemperatur in Wasser eine allenfalls geringe, vorzugsweise gar keine, Löslichkeit besteht. Die Löslichkeit der mineralischen Füllpartikel, insbesondere der erwähnten in Wasser nahezu oder vollständig unlöslichen Salze, sollte hierzu idealerweise die Löslichkeitvon Calciumcarbonat in Wasser bei Raumtemperatur nicht übersteigen. Bei Calciumcarbonat handelt es sich im Übrigen um ein besonders bevorzugtes Beispiel für einen anorganischen Feststoff, der als partikuläre Füllkomponente in der Elektrolyt-Paste enthalten sein kann.

In besonders bevorzugten Ausführungsformen weist die Elektrolyt-Paste die folgende Zusammensetzung auf:

| | | |
|---|---|---|
| - | Chloridbasiertes Leitsalz | 30 bis 40 Gew.- % |
| - | Stellmittel (z.B. SiOx Pulver) | 2 bis 4 Gew.-% |
| - | Mineralische Partikel (z.B. $CaCO_3$) | 10 bis 20 Gew.-% |
| - | Lösungsmittel (bevorzugt Wasser) | 40 bis 55 Gew.-% |

Als chloridbasiertes Leitsalz kommen auch hier bevorzugt Zinkchlorid und/oder Ammoniumchlorid zum Einsatz.

In einigen besonders bevorzugten Ausführungsformen hat es sich hinsichtlich der Impedanzeigenschaften der erfindungsgemäßen Batterie als vorteilhaft herausgestellt, eine Schicht aus einem solchen Elektrolyten mit pastenartiger Konsistenz (kurz: Elektrolytschicht) zwischen dem Separator und mindestens einer der Elektroden der Einzelzellen, bevorzugt zwischen beiden Seiten des Separators und den Elektroden der Einzelzellen jeweils eine Schicht aus diesem Elektrolyten, anzuordnen. Trägt man eine Schicht aus einem solchen Elektrolyten auf eine der Seiten oder beide Seiten des Separators auf, so dringen das Wasser und darin gelöste Komponenten des Elektrolyten in den Separator ein, wohingegen das Stellmittel und/oder die mineralischen Füllpartikel als Schicht auf der oder den Seiten des Separators zurückbleiben. Analog verhält es sich, wenn man den Elektrolyten mit der pastenartigen Konsistenz auf die Elektroden aufträgt.

Da die Elektrolytschichten durch ihren Anteil an mineralischen Füllpartikeln dazu beitragen, die positive Elektrode und die negative Elektrode elektrisch voneinander zu isolieren, kann man sie als fakultative Bestandteile des Separators ansehen. In bevorzugten Ausführungsformen umfassen die Separatoren der Einzelzellen somit auch eine oder zwei solcher Elektrolytschichten.

Bei den elektrischen Leitern einer erfindungsgemäßen Batterie kann es sich beispielsweise um metallische Strukturen handeln, die mittels Abscheidung aus einer Lösung, mittels Abscheidung aus der Gasphase (beispielsweise durch ein PVD-Verfahren wie Sputtern) oderdurch ein Druckverfahren gebildet sind. Es ist auch möglich, die Leiter aus einer geschlossenen Metallschicht durch einen Ätzprozess zu bilden, bei dem die Metallschicht in unmaskierten Bereichen entfernt wird.

In besonders bevorzugten Ausführungsformen zeichnet sich die Batterie durch das folgende zusätzliche Merkmal a. aus:

a. Die Batterie umfasst als elektrische Leiter Leiterbahnen aus Metallpartikeln, insbesondere aus Silberpartikeln oder aus Partikeln aus einer Silberlegierung.

Solche Leiterbahnen lassen sich über ein Druckverfahren problemlos herstellen. Druckbare Leitpasten mit Silberpartikeln zur Herstellung der elektrischen Leitersind Stand der Technik und im Handel frei erhältlich.

In besonders bevorzugten Ausführungsformen zeichnet sich die erfindungsgemäße Batterie durch die unmittelbar folgenden Merkmale aus:

a. Die elektrischen Leiter umfassen eine elektrisch leitende Metallschicht.

b. Die elektrischen Leiter umfassen zumindest bereichsweise eine elektrisch leitende Schicht aus Kohlenstoff, welche zwischen der Metallschicht und den Elektroden angeordnet ist und welche einen unmittelbaren Kontakt der Metallschicht mit einem flüssigen Elektrolyten erschwert oder sogar unterbindet.

Die elektrisch leitende Schicht aus Kohlenstoff dient dem Schutz der elektrischen Leiter. Insbesondere, wenn die Leiter Silberpartikel umfassen, besteht die Gefahr, dass sich Silber im Elektrolyten löst und es zu einer Schwächung oder gar Zerstörung von Leiterbahnen kommt. Die Carbonschicht kann die Leiter aus Silber vor einem unmittelbaren Kontakt mit dem Elektrolyten schützen.

Bevorzugt weist die elektrisch leitende Schicht aus Kohlenstoff eine Dicke im Bereich von 5 $\mu$m bis 30 $\mu$m, insbesondere im Bereich von 10 $\mu$m bis 20 $\mu$m, auf.

In einigen bevorzugten Ausführungsformen wird die Carbonschicht nach dem Aufbringen einer Wärmebehandlung unterzogen, Hierdurch kann ihre Dichtigkeit erhöht werden.

Ein Verfahren zur Herstellung einer Batterie wie der oben beschriebenen zeichnet sich bevorzugt durch die unmittelbar folgenden Schritte a. bis e. aus:

a. Aufbringen eines ersten und eines dritten elektrischen Leiters auf ein erstes, elektrisch nicht leitendes Substrat und eines zweiten elektrischen Leiters auf ein zweites, elektrisch nicht leitendes Substrat.

b. Aufbringen einer schichtförmigen ersten negativen Elektrode unmittelbar auf den ersten elektrischen Leiter und einer schichtförmigen ersten positiven Elektrode unmittelbar auf den dritten elektrischen Leiter.

c. Aufbringen einer schichtförmigen zweiten negativen Elektrode und einer schichtförmigen zweiten positiven Elektrode unmittelbar auf den zweiten elektrischen Leiter, so dass die zweiten Elektroden durch einen Spalt voneinander getrennt sind.

d. Aufbringen eines schichtförmigen Separators auf die erste negative Elektrode oder die zweite positive Elektrode und eines schichtförmigen Separators auf die zweite negative Elektrode oder die erste positive Elektrode.

e. Bilden von zwei Schichtstapeln mit der Sequenz

- erste negative Elektrode / Separator / zweite positive Elektrode, und

- zweite negative Elektrode / Separator / erste positive Elektrode.

Auf mögliche Ausgestaltungen der Leiter und der Elektroden wurde im Zusammenhang mit der erfindungsgemäßen Batterie bereits eingegangen. Auf die entsprechenden Ausführungen wird hiermit Bezug genommen.

Das Aufbringen der Leiter und der Elektroden erfolgt bevorzugt mittels eines Druckverfahrens, insbesondere mittels Siebdruck. Das Aufbringen des Separators kann, wie oben beschrieben, gleichfalls durch ein Druckverfahren erfolgen. Bevorzugt wird allerdings ein Vlies- oder Folienseparator zwischen den Elektroden der Schichtstapel angeordnet.

Um die Schichtstapel in betriebsbereite elektrochemische Zellen zu überführen, ist es meist erforderlich, die Elektroden und die Separatoren mit dem oben beschriebenen flüssigen Elektrolyten zu tränken. Dies kann vor und/oder nach dem Aufbringen der Separatoren erfolgen.

In einer Weiterbildung ist es bevorzugt, dass zwischen die Separatoren und die Elektroden die oben beschriebene Schicht aus dem Elektrolyten mit pastenartiger Konsistenz angeordnet wird. Hierzu kann der Elektrolyt beispielsweise auf die Elektroden aufgedruckt werden bevor die Bildung des Schichtstapels erfolgt.

In einer ersten alternativen, besonders bevorzugten Ausführungsform zeichnet sich das Verfahren durch die unmittelbar folgenden Schritte a. bis d. aus:

a. Vor dem Aufbringen des Separators auf wahlweise die erste negative Elektrode oder die zweite positive Elektrode wird auf die gewählte Elektrode eine erste Schicht aus einer Elektrolyt-Paste gedruckt, insbesondere mit einer Dicke von 30 bis 70 $\mu$m.

b. Vor dem Aufbringen des Separators auf wahlweise die zweite negative Elektrode oder die erste positive Elektrode wird auf die gewählte Elektrode eine zweite Schicht aus einer Elektrolyt-Paste gedruckt, insbesondere mit einer Dicke von 30 bis 70 $\mu$m.

c. Die Separatoren werden auf die erste und die zweite Schicht aus der Elektrolyt-Paste aufgebracht.

d. Nach dem Auflegen der Separatoren werden auf die Separatoren jeweils eine zweite Schicht aus der Elektrolyt-Paste gedruckt, insbesondere mit einer Dicke von 30 bis 70 $\mu$m.

In einer zweiten alternativen, besonders bevorzugten Ausführungsform zeichnet sich das Verfahren durch die folgenden Merkmale aus:

a. Vor dem Aufbringen des Separators auf wahlweise die erste negative Elektrode oder die zweite positive Elektrode wird auf die Elektroden jeweils eine erste Schicht aus einer Elektrolyt-Paste gedruckt, insbesondere mit einer Dicke von 30 bis 70 $\mu$m.

b. Vor dem Aufbringen des Separators auf wahlweise die zweite negative Elektrode oder die erste positive Elektrode wird auf die Elektroden jeweils eine zweite Schicht aus einer Elektrolyt-Paste gedruckt, insbesondere mit einer Dicke von 30 bis 70 $\mu$m.

c. Die Separatoren werden wahlweise auf die erste und die zweite Schicht aus der Elektrolyt-Paste aufgebracht.

d. Die Schichtstapel werden gebildet, so dass auf einer Seite der Separatoren die erste und auf der anderen Seite der Separatoren die zweite Schicht aus dem Elektrolyten angeordnet ist.

Bei so hergestellten Schichtstapeln ist zwischen den Elektroden und den Separatoren immer eine der Schichten aus der Elektrolyt-Paste angeordnet. Oder mit anderen Worten: Die Separatoren so hergestellter Schichtstapel umfassen jeweils beidseitig Schichten aus der Elektrolyt-Paste.

Wie im Zusammenhang mit der erfindungsgemäßen Batterie bereits beschrieben wurde, kann es bevorzugt sein, dass zwei oder mehr Einzelzellen der erfindungsgemäßen Batterie einen gemeinsamen Separator aufweisen. Bei den wahlweise auf die erste negative Elektrode oder die zweite positive Elektrode bzw. die zweite negative Elektrode oder die erste positive Elektrode aufgebrachten Separatoren handelt es sich im Kontext des beschriebenen Verfahrens in solchen Fällen um voneinander separierte Bereiche eines porösen Flächengebildes, wie es oben beschrieben ist, beispielsweise also um voneinander separierte Bereiche einer mikroporösen Polyolefinfolie.

Konsequenterweise wird in solchen Fällen die Elektrolyt-Paste in der ersten alternativen, besonders bevorzugten Ausführungsform nicht auf mehrere separate Separatoren aufgebracht sondern auf getrennte Bereiche des gleichen Flächengebildes.

Vorzugsweise werden vor dem Tränken mit dem flüssigen Elektrolyten und/oder vor dem Aufbringen des Elektrolyten mit der pastenartigen Konsistenz auf dem ersten und dem zweiten Substrat mehrere Siegelrahmen gebildet oder angeordnet, welche die Elektroden umschließen. Diese Siegelrahmen sorgen dafür, dass auf die Elektroden aufgebrachte Flüssigkeit auf den Substraten nicht verläuft. Mögliche Ausführungsformen des Siegelrahmens und Varianten zu dessen Bildung sind aus der EP 3 477 727 A1 bekannt.

Bevorzugt wird der Siegelrahmen aus einer Klebstoffmasse gebildet, die gleichsam mit Hilfe eines Druckverfahrens applizierbar ist. Hierbei lässt sich grundsätzlich jeder Klebstoff verarbeiten, der gegenüber dem jeweils verwendeten Elektrolyten resistent ist und eine ausreichende Haftung zu dem Träger ausbilden kann. Insbesondere kann der Siegelrahmen auch aus einer gelösten Polymerzusammensetzung gebildet werden, zu deren Verfestigung enthaltenes Lösungsmittel entfernt werden muss.

Es ist auch möglich, den Siegelrahmen aus einer thermoaktivierbaren Folie, insbesondere einer Schmelzfolie oder einer selbstklebende Folie, zu bilden.

Zur Herstellung der Elektroden und Leiter verwendbare Druckpasten enthalten neben den jeweiligen festen Bestandteilen bevorzugt auch ein flüchtiges Lösungs- bzw. Suspensionsmittel. Idealerweise handelt es sich dabei um Wasser. Damit es bei Drucken keine Probleme gibt, enthalten die Druckpasten bevorzugt alle partikulären Bestandteile mit Partikelgrößen von maximal 50 $\mu$m.

Wie oben bereits beschrieben, werden die elektrischen Leiter vor dem Aufbringen der Elektroden bevorzugt mit der elektrisch leitenden Schicht aus Kohlenstoff beschichtet, um die Leiter vor einem unmittelbaren Kontakt mit dem Elektrolyten schützen. Auch die Schicht aus Kohlenstoff kann aufgedruckt werden.

Besonders bevorzugte Merkmalskombinationen

Zur Übertragung einer LTE-Nachricht findet zuerst ein Scannen statt. Dabei sucht das Label mögliche Frequenzen für die Datenübertragung. Dieser Vorgang dauert im Schnitt 2s und benötigt 50 mA. Wenn die Frequenz gefunden wurde, wird ein sogenannter TX-Puls abgesetzt. Ein solcher Puls dauert ca. 150 ms an und benötigt hierfür einen elektrischen Strompuls von etwa 200 mA. Ein Puls mit einer Länge 150 ms entspricht etwa einer Frequenz von 4 Hz. Entsprechend ist für Sendung eines solchen Pulses die Impedanz der erfindungsgemäßen Batterie bei 4 Hz von Bedeutung.

Bei gedruckten Einzelzellen erfindungsgemäßer Batterien lassen sich in diesem Zusammenhang besonders gute Ergebnisse erzielen, wenn die Zusammensetzungen der Elektroden sowie die Zusammensetzung des Elektrolyten aufeinander abgestimmt werden. Besonders bevorzugt werden zur Herstellung der Elektroden und Elektrolytschichten von erfindungsgemäßen Batterien die folgenden Pastenzusammensetzungen in Kombination verwendet:

Paste für die negative Elektrode:

| | | |
|---|---|---|
| - | Zinkpulver (Quecksilberfrei): | 65 - 79 Gew.-% |
| - | Emulgator (z.B. CMC) | 1 - 5 Gew.-% |
| - | Binder, elastisch (z.B. SBR) | 5 - 10 Gew.-% |
| - | Lösungsmittel (z.B. Wasser) | 15 - 20 Gew.-% |

Paste für die positive Elektrode:

| | | |
|---|---|---|
| - | Mangandioxid | 50 - 70 Gew.-% |
| - | Leitmaterial (z.B. Grafit, Ruß) | 5 - 8 Gew.-% |
| - | Emulgator (z.B. CMC) | 2 - 8 Gew.-% |
| - | Binder, elastisch (z.B. SBR) | 8 - 15 Gew.-% |
| - | Lösungsmittel (z.B. Wasser) | 20 - 30 Gew.-% |

Elektrolyt-Paste

| | | |
|---|---|---|
| - | Leitsalz Zinkchlorid | 30 - 40 Gew.-% |
| - | Stellmittel (z.B. Silziumoxidpulver) | 2 - 4 Gew.-% |
| - | Mineralische Partikel (z.B. $CaCO_3$) | 10 - 20 Gew.-% |
| - | Lösungsmittel (z.B. Wasser) | 40 - 55 Gew.-% |

Es ist bevorzugt, dass sich Anteile der einzelnen Komponenten in den Pasten jeweils auf 100 Gew.-% aufaddieren. Die Anteile der nichtflüchtigen Komponenten in den Elektroden lassen sich aus den entsprechenden Prozentangaben der Pasten errechnen. So liegen beispielsweise die Anteile an Zink und dem elastischen Binder in einer aus obiger Paste hergestellten negativen Elektrode im Bereich von 81,25 Gew-% bis 92,94 Gew.% (Zink) und 5,62 Gew.-% bis 13,16 Gew.-% (elastischer Binder). Die Anteile an Mangandioxid und dem elastischen Binder in einer aus obiger Paste hergestellten positiven Elektrode liegen im Bereich von 61,72 Gew-% bis 82,35 Gew.% (Mangandioxid) und 8,51 Gew.-% und 20,83 Gew.-% (elastischer Binder).

Die Elektrolyt-Paste wird bevorzugt in Kombination mit einer mikroporösen Polyolefinfolie (z.B. PE) mit einer Dicke im Bereich von 60 bis 120 $\mu$m und einer Porosität von 35 - 60 % eingesetzt. Bevorzugt werden gemäß der obigen ersten oder zweiten alternativen, besonders bevorzugten Ausführungsform Schichten aus der Elektrolyt-Paste auf den Elektroden und/oder dem Separator gebildet, insbesondere mit einer Dicke in den spezifizierten Bereichen, besonders bevorzugt jeweils mit einer Dicke von ca. 50 $\mu$m. Die Anode wird bevorzugt als Schicht mit einer Dicke von 30 $\mu$m bis 150 $\mu$m, insbesondere mit einer Dicke von 70 $\mu$m, gedruckt. Die positive Elektrode wird bevorzugt als Schicht mit einer Dicke von 180 bis 350 $\mu$m, insbesondere mit einer Dicke von 280 $\mu$m, gedruckt.

In einer weiteren bevorzugten Ausführungsform des Verfahrens ist es durch mindestens einen der unmittelbar folgenden zusätzlichen Merkmale und / oder Schritte a. und b. gekennzeichnet:

> a. Bei dem ersten und dem zweiten Substrat handelt es sich um verschiedene Bereiche ein- und desselben Trägers.

> b. Zur Bildung der Schichtstapel wird der Träger umgeschlagen, so dass die erste negative Elektrode mit dem ersten Separator und der zweiten positiven Elektrode überlagert und die zweite negative Elektrode mit dem zweiten Separator und der ersten positiven Elektrode überlagert, wobei durch das Umschlagen und anschließende Verschweißung und / oder Verklebung ein geschlossenes Behältnis gebildet wird, in dem der Schichtstapel angeordnet ist.

In besonders bevorzugten Ausführungsformen des Verfahrens sind die unmittelbar vorstehenden Merkmale a. und b. in Kombination miteinander realisiert.

Wie bereits angesprochen, werden bei einem Verfahren gemäß der Erfindung Schichtstapel mit der Sequenz negative Elektrode / Separator / positive Elektrode gebildet. Dies kann bevorzugt dadurch erfolgen, dass die Elektroden einer Zelle nebeneinander, also in koplanarer Anordnung, auf den Träger gedruckt werden und der Träger derart umgeschlagen beziehungsweise gefaltet wird, dass die Elektroden sowie der dazugehörige Separator jeder Einzelzelle überlagern. Der Träger umschließt den entstandenen Schichtstapel nach dem Umschlagen von mindestens drei Seiten. Durch Verschweißung und/oder Verklebung der übrigen Seiten kann ein geschlossenes Behältnis gebildet werden. Eine Verklebung kommt insbesondere auch dann in Frage, wenn zuvor die Anode und die Kathode mit dem erwähnten Kleberahmen umgeben wurden. In diesem Fall kann der Siegelrahmen die Verklebung herbeiführen.

Das hier beschriebene Verfahren führt unmittelbar zu einer erfindungsgemäßen Batterie mit zwei elektrisch in Reihe geschalteten Einzelzellen. Die Herstellung von Batterien mit drei, vier oder mehr elektrisch in Reihe geschalteten Einzelzellen erfordert die Bereitstellung zusätzlicher Elektroden, Separatoren und Leiter, das Verfahren erfordert in diesen Fällen aber keine zusätzlichen Schritte. So lassen sich beispielsweise alle elektrischen Leiter in einem Verfahrensschritt drucken, unabhängig von ihrer Anzahl. Analoges gilt für die Elektroden und die Elektrolytschichten.

Für die oben beschriebene Ausführungsform zweite, besonders bevorzugte Ausführungsform mit vier Einzelzellen bedarf es etwa eines zusätzlichen vierten und fünften elektrischen Leiters auf dem zweiten Substrat sowie zweier zusätzlicher positiver und negativer Elektroden zur Bildung zweier weiterer Einzelzellen.

Das erfindungsgemäße Funketikett umfasst eine Sende- und/oder Empfangseinheit zum Senden und/oder Empfangen von Funksignalen sowie eine Batterie zur Versorgung der Sende- und/oder Empfangseinheit mit einem elektrischen Strom, wobei die Batterie gemäß den obenstehenden Ausführungen ausgebildet ist. Bevorzugt sind die Sende- und/oder Empfangseinheit sowie die Batterie auf einem Träger angeordnet. Die Batterie ist bevorzugt dazu ausgebildet, die Sende- und/oder Empfangseinheit mit einem elektrischen Strom von in der Spitze $\geq 400$ mA zu versorgen.

Besonders bevorzugt ist die einem Funketikett zugeordnete Batterie gemäß der oben beschriebenen zweiten, besonders bevorzugten Ausführungsform ausgebildet, weist also vier in Serie geschaltete Einzelzellen auf. Bei diesen handelt es sich bevorzugt um Zink-Braunstein-Zellen.

Zur Messung eines von einer Batterie lieferbaren Spitzenstroms wird bevorzugt die Impedanz der Batterie aus dem elektrochemischen Impedanzspektrum (EIS) hergeleitet. Bei diesem Messverfahren werden die Impedanzen Z als Funktion der Messfrequenz f bestimmt, Z = Z(f). Der Belastung durch einen Pulsstrom mit einer Länge von 1s entspricht der Impedanzwert Z(0,5Hz) am besten. Dieser wird mit der Spannungsdifferenz zwischen Ruhespannung und Schlussspannung der elektronischen Anwendung gemäß dem Ohmschen Gesetz verrechnet.

$$\text{Spitzenstrom i = Spannungsdifferenz } \Delta U \ / \ Z(0,5Hz)$$

In bevorzugten Ausführungsformen können die Einzelzellen der Batterie unmittelbar auf dem Träger gebildet werden. Wie oben ausgeführt, kann es sich bei dem ersten und dem zweiten Substrat um Bereiche auf ein und demselben Träger handeln, so dass es dann möglich ist, die elektrischen Leiter und die Elektroden der erfindungsgemäßen Batterie in koplanarer Anordnung auf den Träger aufzubringen und den Träger derart umzuschlagen, dass die negative und die positive Elektrode der Zellen jeweils mit einem Separator überlagern und die als Schichtstapel ausgebildeten Einzelzellen der erfindungsgemäßen Batterie gebildet werden. Der Träger umschließt den entstandenen Schichtstapel nach dem Umschlagen von mindestens drei Seiten. Durch Verschweißung und/oder Verklebung der übrigen Seiten kann ein geschlossenes Behältnis gebildet werden.

Es kann allerdings auch bevorzugt sein, die Batterie separat zu fertigen und auf dem Träger zu fixieren, beispielsweise mittels eines Klebstoffs.

Bezüglich möglicher bevorzugter Ausgestaltungen des Funketiketts wird hiermit auf die WO 2019/145224 A1 verwiesen. Dort ist beispielsweise ausführlich eine Sensorik beschrieben, die Teil des Funketiketts sein kann und mit deren Hilfe Zustandsinformation zu einem Produkt, das mit dem Funketikett gelabelt ist, ermittelt werden können.

Im Rahmen der vorliegend beschriebenen Erfindung sind vor allem der Träger und die Sende- und/oder Empfangseinheit von Belang. Bei letzterer handelt es sich bevorzugt um einen Mobilfunkchip, wie er eingangs erwähnt ist, insbesondere um einen Chip, der Datenübertragungen nach dem LTE-Standard beherrscht.

Der Träger kann nahezu beliebig ausgestaltet sein. Ideal ist, wenn die Oberfläche keine elektrisch leitenden Eigenschaften aufweist, so dass Kurzschlüsse oder Kriechströme ausgeschlossen werden können, falls die Leiter der erfindungsgemäßen Batterie unmittelbar auf den Träger gedruckt werden. Beispielsweise kann der Träger ein Etikett auf Kunststoffbasis sein, geeignet wäre beispielsweise eine Folie aus einem Polyolefin oder aus Polyethylenterephthalat, das auf einer Seite eine Klebefläche aufweist, mit der es an einem Produkt fixiert werden kann. Auf die andere Seite können die elektrischen Leiter der Batterie sowie deren sonstigen Funktionsteile aufgebracht werden.

In besonders bevorzugten Ausführungsformen kann das Funketikett derart ausgestaltet sein, dass es elektrische Energie aus der Umgebung des Funketiketts gewinnen kann. Zu diesem Zweck kann das Funketikett mit einem Energiewandler ausgestattet sein, der dazu in der Lage ist, Energie aus der Umgebung in elektrische Energie umzuwandeln. Für die Umwandlung kann beispielsweise der piezoelektrische Effekt, der thermoelektrische Effekt oder der photoelektrische Effekt genutzt werden. Die Energie aus der Umgebung kann beispielsweise in Form von Licht, elektrischen Feldern, magnetischen Feldern, elektromagnetischen Felder, Bewegung, Druck und/oder Wärme und/oder anderen Energieformen bereitgestellt und mit Hilfe des Energiewandlers genutzt oder "geerntet" werden.

Der Energiewandler ist in bevorzugten Ausführungsformen mit der erfindungsgemäßen Batterie gekoppelt, so dass er diese aufladen kann. Zwar gehören Zink-Manganoxid- oder Zink-Silberoxid-Zellen zu den sogenannten Primärzellen, die grundsätzlich nicht für Aufladungen vorgesehen sind. In begrenztem Umfang funktioniert aber auch bei solchen Zellen eine Wiederaufladung.

Weitere Merkmale der Erfindung sowie aus der Erfindung resultierende Vorteile ergeben sich aus den nachfolgenden Ausführungsbeispielen sowie den Zeichnungen, anhand derer die Erfindung erläutert wird. Die nachfolgend beschriebene Ausführungsform dient lediglich zur Erläuterung und zum besseren Verständnis der Erfindung und ist in keiner Weise einschränkend zu verstehen.

ZEICHNUNGEN UND AUSFÜHRUNGSBEISPIELE

In den Zeichnungen zeigen schematisch

Fig. 1 eine Illustration einer bevorzugten Ausführungsform eines Verfahrens zur Herstellung einer erfindungsgemäßen Batterie,

Fig. 2 einen Querschnitt durch die gemäß der in Fig. 1 dargestellten Vorgehensweise gebildeten Batterie,

Fig. 3 einen Querschnitt durch eine alternative Ausführungsform einer gemäß der in Fig. 1 dargestellten Vorgehensweise gebildeten Batterie,

Fig. 4 ein Funketikett mit der in Fig. 2 dargestellten Batterie (Draufsicht von oben),

Fig. 5 zwei Beispiele eines Schichtstapels einer erfindungsgemäßen Batterie (Draufsicht senkrecht von oben) mit unterschiedlich großen Überlagerungsbereichen, und

Fig. 6 das Ergebnis eines Pulstests mit einer erfindungsgemäßen Batterie.

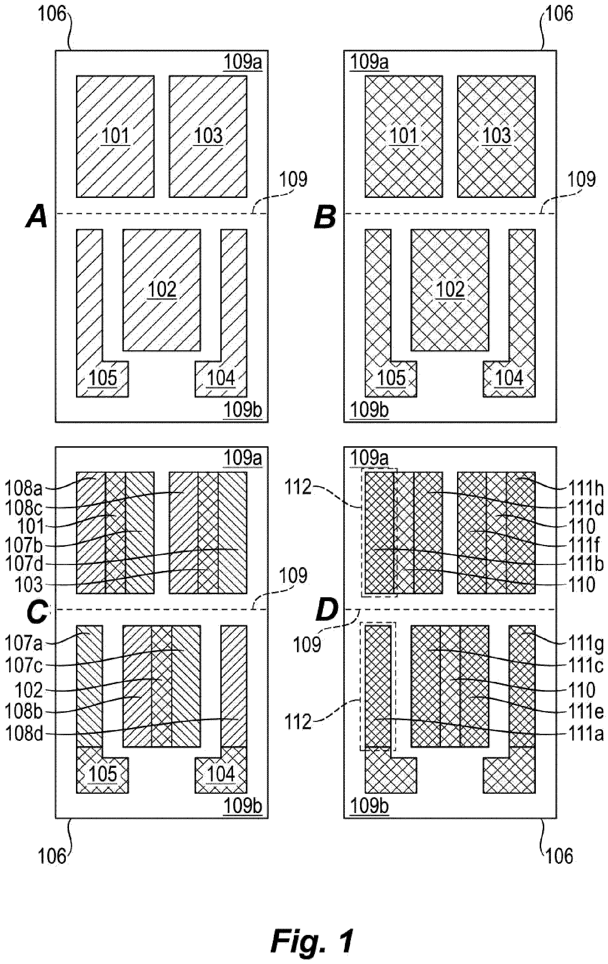

Anhand von **Fig. 1** lässt sich sowohl die Herstellung als auch die Struktur einer bevorzugten Ausführungsform einer erfindungsgemäßen Batterie 100 mit vier elektrisch in Reihe geschalteten Einzelzellen erläutern. Das Verfahren zur Herstellung umfasst die folgenden Schritte:

(1) Auf eine als Träger dienende PET-Folie 106 mit einer Dicke von 200 $\mu$m wird mittels Siebdruck eine Stromleiterstruktur gedruckt. Die PET-Folie 106 ist durch die Linie 109 in zwei Bereiche 109a und 109b unterteilt, von denen der Bereich 109a als erstes Substrat und der Bereich 109b als zweites Substrat dient. Die Stromleiterstruktur umfasst den ersten elektrischen Leiter 101, den zweiten elektrische Leiter 102, den dritten elektrische Leiter 103, den vierten elektrischen Leiter 104 und den fünften elektrischen Leiter 105. Der erste und der dritte Leiter 101 und 103 werden hierbei auf das erste Substrat 109a gedruckt. Die Leiter 102, 104 und 105 werden auf das zweite Substrat 109b gedruckt. Als Druckpaste dient hierbei eine handelsübliche Silberleitpaste. Im Bereich der elektrischen Leiter 101-105 ist die PET-Folie 106 jeweils vollflächig mit der Paste beschichtet, so dass die Leiter jeweils eine durchgehende elektrisch leitende Fläche bilden. Alle elektrischen Leiter werden bevorzugt als Schichten mit einer Dicke im Bereich von 10 $\mu$m $\mu$m bis 100 $\mu$m gebildet. Das Ergebnis dieses Schritts ist in Fig. 1A dargestellt, wobei zu beachten ist, dass alle in der Zeichnung dargestellten Schichten parallel zur Zeichenebene angeordnet sind. Dies gilt analog für auf den Leitern abgeschiedene Carbon-, Elektroden- und Elektrolytschichten.

(2) In einem weiteren Schritt wird die Stromleiterstruktur mit einer dünnen Lage aus Kohlenstoffpartikeln abgedeckt. Die Lage aus den Kohlenstoffpartikeln wird bevorzugt mit einer Dicke von 12 $\mu$m gebildet. Als Druckpaste dient hierbei eine typische Carbon-Paste, wie sie zur Bildung elektrisch leitfähiger Schichten und Verbindungen in der Elektronik verwendet wird. Das Ergebnis dieses Schritts ist in Fig. 1B dargestellt.

Um die Abdeckung der Stromableiterstruktur durch die Lage aus den Kohlenstoffpartikeln zu optimieren, kann es bevorzugt sein, die gebildete Lage einer Wärmebehandlung zu unterziehen. Die dabei anwendbare Temperatur richtet sich primär nach der thermischen Stabilität der PET-Folie und muss entsprechend gewählt werden.

(3) Anschließend werden die negativen Elektroden 107a, 107b, 107c und 107d und die positiven Elektroden 108a, 108b, 108c und 108d auf die Stromleiterstruktur gedruckt. Hierzu wird der erste elektrische Leiter 101 unter Ausbildung der negativen Elektrode 107b bereichsweise mit einer Zinkpaste und unter Ausbildung der positiven Elektrode 108a bereichsweise mit einer Manganoxidpaste überdruckt. Der zweite elektrische Leiter 102 wird unter Ausbildung der negativen Elektrode 107c bereichsweise mit der Zinkpaste und unter Ausbildungder positiven Elektrode 108b bereichsweise mit der Manganoxidpaste überdruckt. Der dritte elektrische Leiter 103 wird unter Ausbildung der negativen Elektrode 107d bereichsweise mit der Zinkpaste und unter Ausbildung der positiven Elektrode 108c bereichsweise mit der Manganoxidpaste überdruckt. Der vierte elektrische Leiter 104 wird unter Ausbildung der positiven Elektrode 108d bereichsweise mit der Manganoxidpaste überdruckt. Und der fünfte elektrische Leiter 105 wird unter Ausbildung der negativen Elektrode 107a bereichsweise mit der Zinkpaste überdruckt Die Pasten weisen die folgenden Zusammensetzungen auf:

Zinkpaste:

| | |
|---|---|
| - Zinkpartikel | 70 Gew.-% |
| - CMC | 2 Gew.-% |
| - SBR | 6 Gew.-% |
| - Lösungsmittel (Wasser) | 22 Gew.-% |

Manganoxidpaste:

| | |
|---|---|
| - Manganoxid | 60 Gew.-% |
| - Graphit | 6 Gew.-% |
| - Zinkchlorid | 2 Gew.-% |
| - CMC | 2 Gew.-% |
| - SBR | 5 Gew.-% |
| - Lösungsmittel (Wasser) | 25 Gew.-% |

Das Ergebnis dieses Schritts ist in Fig. 1C dargestellt.

Die negativen Elektroden 107a - 107d und die positiven Elektroden 108a -108d werden jeweils in Form von rechteckigen Streifen mit einer Länge von 11 cm und einer Breite von 2 cm ausgebildet. Die negativen Elektroden 107a - 107d werden hierbei bevorzugt als Schichten mit einer Dicke von 70 $\mu$m gebildet. Die positiven Elektroden 108a -108d werden bevorzugt als Schichten mit einer Dicke von 280 $\mu$m gebildet. Für die Bildung der positiven Elektroden 108a -108d wird gegebenenfalls mehr als ein Druckvorgang benötigt.

Über den ersten Leiter 101, den zweiten Leiter 102 und den dritten Leiter 103 sind jeweils zwei der Elektroden elektrisch miteinander verbunden. Der Leiter 101 verbindet die positive Elektrode 108a mit der negativen Elektrode 107b, der Leiter 102 verbindet die positive Elektrode 108b mit der negativen Elektrode 107c und der Leiter 103 verbindet die positive Elektrode 108c mit der negativen Elektrode 107d. Diese elektrischen Verbindungen sind die Basis für die gewünschte serielle Verschaltung der vier Einzelzellen.

Die Leiter 101, 102 und 103, die jeweils zwei Elektroden elektrisch miteinander verbinden, bilden auf der Oberfläche des jeweiligen Substrats 109a und 109b jeweils eine elektrisch leitende Fläche, die größer als die Fläche ist, welche die elektrisch miteinander verbundenen Elektroden 108a und 107b, 108b und 107c sowie 108c und 107d auf der Oberfläche einnehmen. Zum einen umfassen die elektrisch leitenden Flächen jeweils einen Bereich, der von den Elektroden abgedeckt ist. Zum anderen ist zwischen den elektrisch verbundenen Elektroden jeweils ein Spalt 110 ausgebildet, der die Elektroden voneinander trennt. Die elektrisch leitenden Flächen erstrecken sich auch über diesen Spalt 110, mit dem Ergebnis, dass der Querschnitt des Leiters in dem Spalt zwischen den Elektroden nicht abfällt.

All dies wirkt sich positiv auf die Impedanzwerte der erfindungsgemäßen Batterie 100 aus. Die großflächige Kontaktierung der Elektroden und insbesondere auch die Verbindung über den Spalt 110 gewährleistet eine optimale elektrische Anbindung der Elektroden und minimiert elektrische Widerstände.

Auch der vierte und der fünfte Leiter 104 und 105, die nur mit den Elektroden 107a und 108d in elektrischem Kontakt stehen, bilden auf der Oberfläche des jeweiligen Substrats eine elektrisch leitende Fläche, die größer ist als die Fläche, welche die jeweils elektrisch kontaktierte Elektrode auf der Oberfläche einnimmt. Zum einen umfassen die elektrisch leitenden Flächen jeweils einen Bereich, der von den Elektroden abgedeckt ist. Zum anderen ist umfassen die elektrisch leitenden Flächen jeweils einen nicht von Elektrodenmaterial bedeckten Bereich. Diese Bereiche können als Pole der Batterie 100 dienen, um die addierte Spannung ihrer vier seriell verschalteten Einzelzellen abgreifen zu können.

(5) In einem weiteren Folgeschritt werden die negativen Elektroden 107a - 107d und die positiven Elektroden 108a -108d mit einer Zinkchlorid-Paste bedruckt. Es werden dabei die Elektrolytschichten 111a - 111h gebildet, die jeweils beispielsweise eine Dicke von ca. 50 $\mu$m aufweisen.

Das Ergebnis dieses Schritts ist in Fig. 1D dargestellt.

Bevorzugt kommt in diesem Schritt eine Elektrolyt-Paste mit folgender Zusammensetzung zum Einsatz:

| | |
|---|---|
| - Zinkchlorid | 35 Gew.-% |
| - Stellmittel (Siliziumdioxid) | 3 Gew.-% |
| - Mineralische, wasserunlösliche Partikel | 15 Gew.-% |
| - Lösungsmittel (Wasser) | 47 Gew.-% |

Das Stellmittel und die wasserunlöslichen Partikel wirken elektrisch isolierend.

Besonders vorteilhaft ist es, wenn vor dem Aufdrucken der Paste um die einzelnen Elektroden beispielsweise mittels einer Klebstoffmasse ein Siegelrahmen 112 gebildet wird, der die Elektroden umschließt. Als Ausgangsmaterial für die Bildung des Siegelrahmens 112 kann beispielsweise ein handelsüblicher Lötstopplack dienen. Exemplarisch sind zwei Siegelrahmen 112 dargestellt, die die Elektroden 107a und 108a umschließen. Bei entsprechender Verfahrensführung sind zweckmäßigerweise alle Elektroden mit Siegelrähmen zu umschließen.

(6) Anschließend werden die Elektrolytschichten 111a - 111h mit einem oder mehreren Separatoren abgedeckt, wobei dies bevorzugt unverzüglich nach dem Drucken der Elektrolytschichten erfolgt, so dass die Elektrolytschichten nicht austrocknen. Dann wird die PET-Folie 106 entlang der Linie 109 gefaltet und umgeschlagen, so dass

- die negative Elektrode 107a mit dem Separator oder einem der Separatoren und mit der positiven Elektrode 108a einen ersten Schichtstapel bildet,
- die negative Elektrode 107b mit dem Separator oder einem der Separatoren und mit der positiven Elektrode 108b einen zweiten Schichtstapel bildet,
- die negative Elektrode 107c mit dem Separator oder einem der Separatoren und mit der positiven 108c einen dritten Schichtstapel bildet, und
- die negative Elektrode 107d mit dem Separator oder einem der Separatoren und mit der positiven Elektrode 108d einen vierten Schichtstapel bildet.

Durch das Umschlagen und eine abschließende Verschweißung und / oder Verklebung kann ein geschlossenes Gehäuse gebildet werden, in dem die Schichtstapel angeordnet sind.

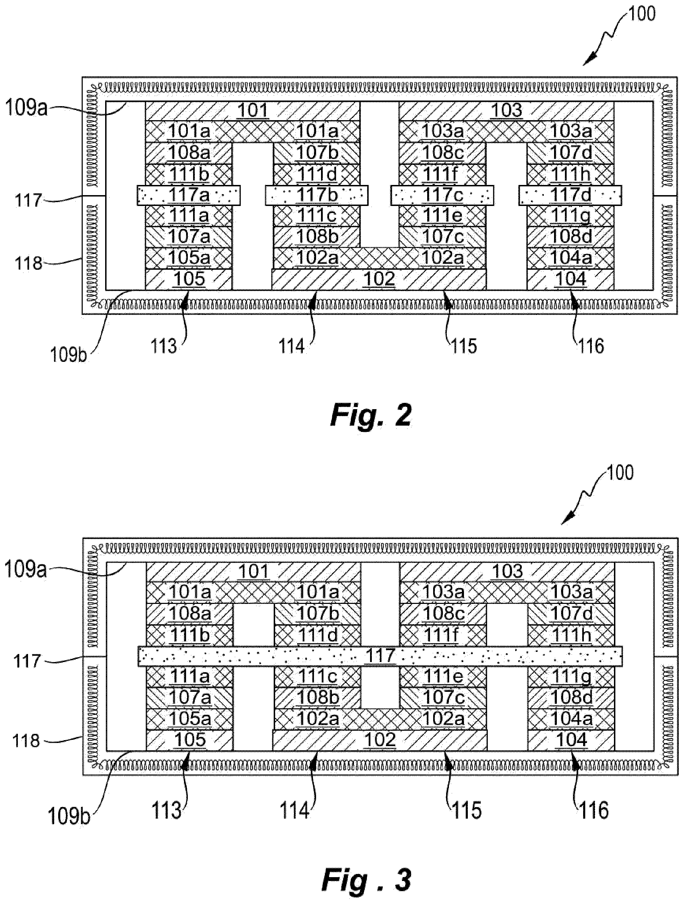

Das Ergebnis dieses Schritts ist in den Figuren 2 und 3 dargestellt.

Als Separator bzw. Separatoren können beispielsweise ein handelsüblicher Vlies-Separator oder eine mikroporöse Polyolefinfolie eingesetzt werden. Bevorzugt wird hierbei eine mikroporöse Polyolefinfolie eingesetzt, der eine Dicke im Bereich von 60 - 120 $\mu$m liegt und die eine Porosität (Verhältnis von Hohlraumvolumen zu Gesamtvolumen) von 35 - 60 % aufweist.

Die in Fig. 2 im Querschnitt dargestellte Batterie 100 umfasst vier als Schichtstapel ausgebildete Einzelzellen 113, 114, 115 und 116. Die dargestellte Batterie lässt sich gemäß dem in Fig. 1 illustrierten Vorgehen fertigen, wobei zur Bildung der Einzelzellen insgesamt vier als Schicht ausgebildete Separatoren 117a - 117d eingesetzt werden.

Neben den Separatoren 117a - 117d umfassen die Schichtstapel 113-116 jeweils eine der negativen Elektroden 107a - 107d und eine der positiven Elektroden 108a -108d. Im Detail: Der Schichtstapel 113 umfasst die elektrischen Leiter 101 und 105. Diese umfassen die Lagen 101a und 105a aus Kohlenstoffpartikeln, die sie vor einem Kontakt mit dem Elektrolyten schützen. Die positive Elektrode 108a ist unmittelbar auf der Lage 101a abgeschieden, die negative Elektrode 107a unmittelbar auf der Lage 105a. Zwischen den Elektroden 107a und 108a ist der Separator 117a angeordnet, der von den Elektrolytschichten 111a und 111b eingerahmt ist. Da die Elektrolytschichten 111a und 111b durch ihren Anteil an elektrisch nicht leitenden Komponenten dazu beitragen, die positive Elektrode 108a und die negative Elektrode 107a elektrisch voneinander zu isolieren, kann man sie als Bestandteile des Separators 117a ansehen.

Der Schichtstapel 114 umfasst die elektrischen Leiter 101 und 102. Diese umfassen die Lagen 101a und 102a aus Kohlenstoffpartikeln, die sie vor einem Kontakt mit dem Elektrolyten schützen. Die positive Elektrode 108b ist unmittelbar auf der Lage 102a abgeschieden, die negative Elektrode 107b unmittelbar auf der Lage 101a. Zwischen den Elektroden 107b und 108b ist der Separator 117b angeordnet, der von den Elektrolytschichten 111c und 111d eingerahmt ist. Da die Elektrolytschichten 111c und 111d durch ihren Anteil an elektrisch nicht leitenden Komponenten dazu beitragen, die positive Elektrode 108b und die negative Elektrode 107b elektrisch voneinander zu isolieren, kann man sie als Bestandteile des Separators 117b ansehen.

Der Schichtstapel 115 umfasst die elektrischen Leiter 102 und 103. Diese umfassen die Lagen 102a und 103a aus Kohlenstoffpartikeln, die sie vor einem Kontakt mit dem Elektrolyten schützen. Die positive Elektrode 108c ist unmittelbar auf der Lage 103a abgeschieden, die negative Elektrode 107c unmittelbar auf der Lage 102a. Zwischen den Elektroden 107c und 108c ist der Separator 117c angeordnet, der von den Elektrolytschichten 111e und 111f eingerahmt ist. Da die Elektrolytschichten 111e und 111f durch ihren Anteil an elektrisch nicht leitenden Komponenten dazu beitragen, die positive Elektrode 108c und die negative Elektrode 107c elektrisch voneinander zu isolieren, kann man sie als Bestandteile des Separators 117c ansehen.

Der Schichtstapel 116 umfasst die elektrischen Leiter 103 und 104. Diese umfassen die Lagen 103a und 104a aus Kohlenstoffpartikeln, die sie vor einem Kontakt mit dem Elektrolyten schützen. Die positive Elektrode 108d ist unmittelbar auf der Lage 104a abgeschieden, die negative Elektrode 107d unmittelbar auf der Lage 103a. Zwischen den Elektroden 107d und 108d ist der Separator 117d angeordnet, der von den Elektrolytschichten 111g und 111h eingerahmt ist. Da die Elektrolytschichten 111g und 111h durch ihren Anteil an elektrisch nicht leitenden Komponenten dazu beitragen, die positive Elektrode 108d und die negative Elektrode 107d elektrisch voneinander zu isolieren, kann man sie als Bestandteile des Separators 117d ansehen.

Der erste Leiter 101 und der dritte Leiter 103 sind beanstandet voneinander auf einer dem zweiten Substrat 109b zugewandten Oberfläche des ersten Substrats 109a angeordnet sind, während der zweite Leiter 102, der vierte Leiter 104 und der fünfte Leiter 105 beanstandet voneinander auf einer dem ersten Substrat 109a zugewandten Oberfläche des zweiten Substrats 109b angeordnet ist,

Die vier Einzelzellen 113, 114, 115 und 116 sind elektrisch in Reihe geschaltet, so dass sich ihre Spannungen addieren. Zu diesem Zweck sind entgegengesetzt gepolte Elektroden der Einzelzellen über den ersten Leiter 101, den zweiten Leiter 102 und den dritten Leiter 103 elektrisch miteinander verbundenen. Die Leiter Elektroden eine entgegengesetzte Polarität aufweisen, und der erste Leiter steht elektrisch mit einer Elektrode der vierten Einzelzelle in Kontakt, wobei die durch diesen Leiter elektrisch verbundenen Elektroden gleichfalls eine entgegengesetzte Polarität aufweisen. Wie oben bereits ausgeführt, können nicht von Elektrodenmaterial bedeckte Bereiche der Leiter 104 und 105 als Pole der Batterie 100 dienen, um die addierte Spannung ihrer vier seriell verschalteten Einzelzellen 113 - 116 abgreifen zu können.

Da die hier beschriebenen Einzelzellen 113-116 auf Zink-Braunstein als elektrochemischem System basieren, liefert jede der Zellen eine Nennspannung von ca. 1,5 Volt. Die Batterie 100 vermag daher eine Nennspannung von ca. 6 Volt bereitzustellen.

In Folge des erwähnten Umschlagens und der abschließenden Verschweißung und / oder Verklebung entlang der Linie 117 weist die erfindungsgemäße Batterie 110 ein geschlossenes Gehäuse 118 auf, in dem die Schichtstapel 113 bis 116 angeordnet sind. Die nicht von Elektrodenmaterial bedeckten Bereiche der Leiter 104 und 105 können aus dem Gehäuse herausgeführt werden, damit die Spannung der Batterie 100 von außen abgreifbar ist.

Für die Impedanzeigenschaften der erfindungsgemäßen Batterie 100 ist es wesentlich, dass die innerhalb der Schichtstapel in unmittelbarem Kontakt stehenden schichtförmigen Komponenten der Einzelzellen 113 - 116 einen möglichst großflächigen Kontakt zueinander aufweisen. Dies wird anhand der Einzelzelle 113 erläutert.

Zunächst ist es zur Optimierung der Impedanz erforderlich, einen möglichst großflächigen Kontakt zwischen den Elektroden 107a und 108a und den elektrischen Leitern 101 und 105 bereitzustellen. Wie oben ausgeführt, bilden die Leiter 101 und 105 auf den Substraten 109a und 109b jeweils durchgehende, elektrisch leitende Flächen aus, wie es in Fig. 1A und 1B dargestellt ist. Die von dem Leiter 101 gebildete elektrisch leitende Fläche und die darauf abgeschiedene Elektrode 108a etwa überlagern in Blickrichtung senkrecht zu der Elektrode 108a und dem Leiter 101 in einem Überlagerungsbereich, in welchem eine Gerade senkrecht zu der Elektrode 108a sowohl die Elektrode als auch den Leiter 101 schneidet. Im konkreten Fall beträgt diese Überlagerungsbereich exakt der Fläche der Elektrode 108a. Die Elektrode 108a steht somit vollflächig mit dem elektrischen Leiter 101 in Kontakt. Im Fall des Kontaktes zwischen der Elektrode 107a mit dem Leiter 105 gilt das analog. Auch hier liegt eine vollflächige Kontaktierung vor.

Des Weiteren von Bedeutung ist die Anbindung der Elektroden 107a und 108a an den Separator 117a. Der Separator 117a steht, wie oben erläutert, über die Elektrolytschichten 111a und 111b mit den Elektroden 107a und 108a in Kontakt, wobei im vorliegenden Beispiel die Elektrolytschichten 111a und 111b als Teil des Separators 117a angesehen werden. Eine Seite des Separators weist eine erste Kontaktfläche zur positiven Elektrode 108a auf, die andere Seite parallel dazu eine zweite Kontaktfläche zur negativen Elektrode 107a. Bevorzugt überlagern die Kontaktflächen einander in Blickrichtung senkrecht zu dem Separator in einem Überlagerungsbereich, welcher dadurch definiert ist, dass eine Gerade senkrecht zu dem Separator beide Kontaktflächen schneidet.

Da die Elektroden 107a und 108a vorliegend identischer Flächendimensionen aufweisen und innerhalb des Stapels nicht versetzt zueinander angeordnet sind, entspricht die Größe dieses Überlagerungsbereichs exakt der Größe der Elektroden 107a und 108a. Die Elektroden 107a und 108a stehen somit nicht nur mit den Leitern 101 und 105 vollflächig in Kontakt, sondern auch mit dem Separator bzw. den Elektrolytschichten 111a und 111b des Separators.

Die in **Fig. 3** dargestellte Batterie 100 unterscheidet sich von der in Fig. 2 dargestellten Batterie 100 nur darin, dass die Einzelzellen 113 - 116 der erfindungsgemäßen Batterie an Stelle mehrerer Separatoren das poröse Flächengebilde 117 als gemeinsamen Separator aufweisen.

Das poröse Flächengebilde 117 weist vier voneinander separierte Bereiche auf, über welche die entgegengesetzt gepolten Elektroden der vier Schichtstapel in Verbindung stehen. Der erste dieser Bereiche ist durch Kontaktflächen zu den Elektroden 107a und 108a definiert, der zweite durch Kontaktflächen zu den Elektroden 107b und 108b, der dritte durch Kontaktflächen zu den Elektroden 107c und 108c und der vierte durch Kontaktflächen zu den Elektroden 107d und 108d. Die Verwendung eines gemeinsamen Separators 117 kann die Produktion der erfindungsgemäßen Batterie 100 deutlich vereinfachen.

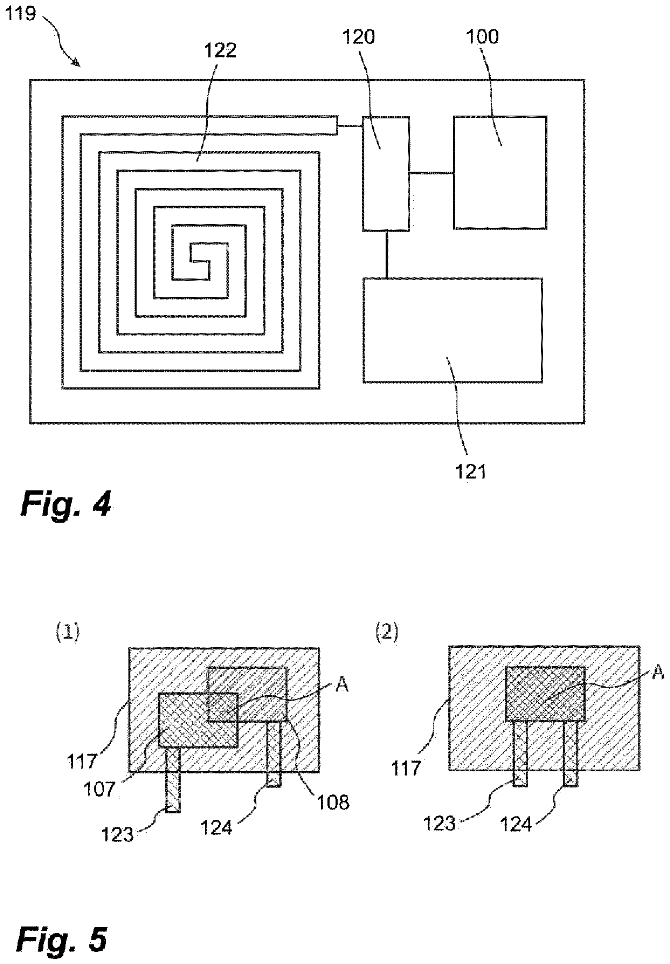

Das in **Fig. 4** dargestellte Funketikett 119 umfasst neben der Batterie 100 eine Sende- und/oder Empfangseinheit 120 zum Senden und/oder Empfangen von Funksignalen, eine Sensorik 121 und eine mit der Sende- und/oder Empfangseinheit 120 gekoppelte Antenne 122. Die Komponenten des Funketiketts sind über eine Leiterstruktur miteinander verbunden. Auf der Unterseite des Etiketts 119 kann eine Klebeschicht (nicht dargestellt) angeordnet sein, mittels der das Funketikett 119 an einem Produkt fixiert werden kann.

Anhand von **Fig. 5** wird der in der vorliegenden Anmeldung verwendete Begriff des Überlagerungsbereichs erläutert. In Fig. 5 sind Beispiele eines Schichtstapels dargestellt, bei dem ein als Schicht ausgebildeter Separator 117 zwischen der als Schicht ausgebildeten negativen Elektrode 107 und der als Schicht ausgebildeten positiven Elektrode 108 angeordnet ist. Die negative Elektrode 107 und die positive Elektrode 108 sind jeweils rechteckig ausgebildet und bedecken jeweils die gleiche Fläche auf dem Separator 117. Alle Schichten sind in der Zeichnung parallel zur Zeichenebene angeordnet. Die Fläche des Separators 117, die von der negativen Elektrode 107 bedeckt wird, ist in der vorstehenden Beschreibungals erste Kontaktfläche definiert. Die Fläche des Separators 117, die von der positiven Elektrode 108 bedeckt wird, ist in der vorstehenden Beschreibung als zweite Kontaktfläche definiert.

In Fig. 5 (1) sind die negative Elektrode 107 und die positive Elektrode 108 versetzt zueinander angeordnet, so dass die erste und die zweite Kontaktfläche einander in Blickrichtung senkrecht zur Zeichenebene und damit senkrechtzu dem Separator 117 nur teilweise überlagern. Der Überlagerungsbereich A ist daher kleiner als die Flächen, die die negative Elektrode 107 und die positive Elektrode 108 auf dem Separator 117 bedecken.

In Fig. 5 (2) überlagern sich die negative Elektrode 107 und die positive Elektrode 108 dagegen vollständig. Die Größe des Überlagerungsbereichs A entspricht daher exakt der Fläche der negativen Elektrode 107 und der positiven Elektrode 108.

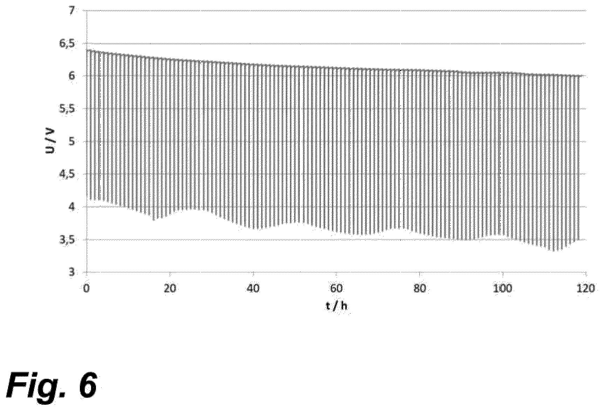

Die in **Fig.** 6 dargestellten Ergebnisse eines Pulstests wurden mit einer Batterie durchgeführt, die vier elektrisch in Reihe geschaltete Einzelzellen umfasste und gemäß Fig. 2 ausgebildet war. Die Elektroden der vier Zellen erstreckten sich auf den jeweiligen Substraten jeweils über eine Fläche von ca. 22 cm$^2$. Die Einzelzellen waren elektrisch in Reihe geschaltet und lieferten eine Nennspannung von 6V. Tatsächlich betrug die Ruhespannung ca. 6,4 Volt, die Entladeschlussspannung ca. 3,1 Volt. Vor der Messung wurde die Batterie über einen Zeitraum von einem Monat bei 45 ° gelagert, um künstlich eine Alterung zu simulieren. Die Batterie lieferte dennoch insgesamt 118 TX-Pulse. Eine frische Batterie lieferte bei einem Belastungstest mehr als 400 Tx-Pulse und eignet sich somit hervorragend zur Stromversorgung eines LTE-Chips.

**Patentansprüche**

**1.** Batterie (100), welche insbesondere zur Versorgung einer Sende- und/oder Empfangseinheit (120) eines Funketiketts (119) mit einem elektrischen Strom von in der Spitze ≥ 400 mA dient, mit den folgenden Merkmalen:

a. Sie umfasst eine erste und eine zweite als Schichtstapel ausgebildete Einzelzelle (114,115) mitjeweils

- einer negativen Elektrode (107b, 107c) und
- einer positiven Elektrode (108b, 108c) und
- einem Separator (117; 117a, 117b), der zwischen der positiven Elektrode (108b, 108c) und der negativen Elektrode (107b, 107c) angeordnet ist,

b. sie umfasst mehrere separate elektrische Leiter (101, 102, 103), von denen

- ein erster Leiter (101) eine der Elektroden (107b) der ersten Einzelzelle (114) elektrisch kontaktiert,
- ein zweiter Leiter (102) zwecks Ausbildung einer Serienschaltung die nicht von dem ersten Leiter (101) kontaktierte Elektrode (108b) der ersten Einzelzelle (114) mit einer entgegengesetzt gepolten Elektrode (107c) der zweiten Einzelzelle (115) elektrisch verbindet und
- ein dritter Leiter (103) die nicht von dem zweiten Leiter (102) kontaktierte Elektrode (108c) der zweiten Einzelzelle (115) elektrisch kontaktiert, und

c. sie umfasst ein erstes und ein zweites Substrat (109a, 109b), zwischen denen die Einzelzellen (114, 115) und die elektrischen Leiter (101, 102, 103) angeordnet sind,

wobei

d. der erste und der dritte Leiter (101, 103) beanstandet voneinander auf einer dem zweiten Substrat (109b) zugewandten Oberfläche des ersten Substrats (109a) angeordnetsind, und der zweite Leiter (102) auf einer dem ersten Substrat (109a) zugewandten Oberfläche des zweiten Substrats (109b) angeordnet ist,

e. die elektrisch miteinander verbundenen Elektroden (108b, 107c) der ersten und der zweiten Einzelzelle (114, 115) in Form von Schichten und nebeneinander auf der dem ersten Substrat (109a) zugewandten Oberfläche des zweiten Substrats (109b) angeordnet sind, wobei sie jeweils einen Teilbereich des zweiten Leiters (102) überdecken und durch einen Spalt (110) voneinander getrennt sind,

f. die nicht über den zweiten Leiter (102) miteinander verbundenen Elektroden (107b, 108c) in Form von Schichten auf der dem zweiten Substrat (109b) zugewandten Oberfläche des ersten Substrats (109a) angeordnet sind, wobei die mit dem ersten Leiter (101) in elektrischem Kontakt stehende Elektrode (107b) zumindest einen Teilbereich des ersten Leiters (101) und die mit dem dritten Leiter (103) in elektrischem Kontakt stehende Elektrode (108c) zumindest einen Teilbereich des dritten Leiters (103) überdeckt, und

g. die gleichfalls in Form von Schichten vorliegenden Separatoren (117; 117b, 117c) der Einzelzellen (114, 115) jeweils mit einer ihrer Seiten in flächigem Kontakt mit einer der elektrisch miteinander verbundenen Elektroden (108b, 107c) und mit der anderen ihrer Seiten in flächigem Kontakt mit einer der elektrisch nicht miteinander verbundenen Elektroden (107b, 108c) stehen.

**2.** Batterie (100) nach Anspruch 1 mit den folgenden zusätzlichen Merkmalen:

a. Sie umfasst neben der ersten und der zweiten Einzelzelle (114, 115) eine zusätzliche dritte Einzelzelle (116) mit einer negativen Elektrode (107d), einer positiven Elektrode (108d) und einem zwischen der negativen Elektrode (107d) und der positiven Elektrode (108d) angeordneten Separator (117; 117d).

b. Die drei Einzelzellen (114, 115, 116) sind in Reihe geschaltet, so dass sich ihre Spannungen addieren.

c. Der dritte Leiter (103) steht hierzu mit einer Elektrode (107d) der dritten Einzelzelle (116) in elektrischem Kontakt, wobei die durch diesen Leiter (103) elektrisch verbundenen Elektroden (108c, 107d) eine entgegengesetzte Polarität aufweisen.

d. Die Batterie (100) umfasst einen vierten elektrischen Leiter (104), der die nicht von dem dem dritten Leiter (103) kontaktierte Elektrode (108d) der dritten Einzelzelle (116) elektrisch kontaktiert.

**3.** Batterie (100) nach Anspruch 2 mit mindestens einem der folgenden zusätzlichen Merkmale:

a. Der vierte Leiter (104) ist beabstandet von dem zweiten Leiter (102) auf der dem ersten Substrat (109a) zugewandten Oberfläche des zweiten Substrats (109b) angeordnet.

b. Die mit dem dritten Leiter (103) in elektrischem Kontakt stehende Elektrode (107d) der dritten Einzelzelle (116) ist in Form einer Schicht auf dem ersten Substrat (109a) angeordnet, wobei sie einen Teilbereich des dritten Leiters (103) überdeckt und durch einen Spalt (110) von der weiteren auf dem Leiter (103) angeordneten Elektrode (108c) getrennt ist.

c. Die nicht mit dem dritten Leiter (103) in elektrischem Kontakt stehende Elektrode (108d) der dritten Einzelzelle (116) ist in Form einer Schicht auf der dem ersten Substrat (109a) zugewandten Oberfläche des zweiten Substrats (109b) angeordnet und überdeckt dabei zumindest einen Teilbereich des vierten Leiters (104).

d. Der gleichfalls als Schicht ausgebildete Separator (117; 117d) der dritten Einzelzelle (116) steht mit einer seiner Seiten in flächigem Kontakt mit der auf dem vierten Leiter (104) angeordneten Elektrode (108d) derdritten Einzelzelle (116) und mit der anderen seiner Seiten in flächigem Kontakt mit der auf dem dritten Leiter (103) angeordneten Elektrode (107d) der dritten Einzelzelle (116).

4. Batterie (100) nach einem der Ansprüche 2 oder 3 mit den folgenden zusätzlichen Merkmalen:

a. Sie umfasst neben der ersten und der zweiten und der dritten Einzelzelle (114, 115, 116) eine zusätzliche vierte Einzelzelle (113) mit einer negativen Elektrode (107a), einer positiven Elektrode (108a) und dem zwischen der negativen Elektrode (107a) und der positiven Elektrode (108a) angeordneten Separator (117; 117a).

b. Die vier Einzelzellen (113, 114, 115, 116) sind in Reihe geschaltet, so dass sich ihre Spannungen addieren.

c. Hierzu steht der dritte Leiter (103) elektrisch mit einer Elektrode (107d) der dritten Einzelzelle (116) in Kontakt, wobei die durch diesen Leiter (103) elektrisch verbundenen Elektroden (108c, 107d) eine entgegengesetzte Polarität aufweisen, und der erste Leiter (101) steht elektrisch mit einer Elektrode (108a) der vierten Einzelzelle (113) in Kontakt, wobei die durch diesen Leiter (101) elektrisch verbundenen Elektroden (108a, 107b) gleichfalls eine entgegengesetzte Polarität aufweisen.

d. Die Batterie (100) umfasst einen fünften elektrischen Leiter (105), der die verbleibende Elektrode (107a) der vierten Einzelzelle (113) elektrisch kontaktiert.

5. Batterie (100) nach Anspruch 4 mit mindestens einem der folgenden zusätzlichen Merkmale:

a. Der fünfte Leiter (105) ist in Form einer Schicht und beabstandet von dem zweiten Leiter (102) und dem vierten Leiter (104) auf der dem ersten Substrat (109a) zugewandten Oberfläche des zweiten Substrats (109b) angeordnet.

b. Die mit dem dritten Leiter (103) in Kontakt stehende Elektrode (107d) der dritten Einzelzelle (116) ist in Form einer Schicht auf dem ersten Substrat (109a) angeordnet, wobei sie einen Teilbereich des dritten Leiters (103) überdeckt und durch einen Spalt (110) von der weiteren auf dem dritten Leiter (103) angeordneten Elektrode (108c) getrennt ist.

c. Die mit dem vierten Leiter (104) in Kontakt stehende Elektrode (108d) der dritten Einzelzelle (116) ist in Form einer Schicht auf der dem ersten Substrat (109a) zugewandten Oberfläche des zweiten Substrats (109b) angeordnet und überdeckt dabei zu mindest einen Teilbereich des vierten Leiters (104).

d. Die mit dem ersten Leiter (101) in Kontaktstehende Elektrode (108a) der vierten Einzelzelle (113) ist in Form einer Schicht auf dem ersten Substrat (109a) angeordnet, wobei sie einen Teilbereich des ersten Leiters (101) überdeckt und durch einen Spalt (110) von derweiteren auf dem ersten Leiter (101) angeordneten Elektrode (107b) getrennt ist.

e. Die elektrisch nicht dem ersten Leiter (101) in Kontakt stehende Elektrode (107a) der vierten Einzelzelle (113) ist in Form einer Schicht auf der dem ersten Substrat (109a) zugewandten Oberfläche des zweiten Substrats (109b) angeordnet und überdeckt dabei zumindest einen Teilbereich des fünften Leiters (105).

f. Der gleichfalls als Schicht ausgebildete Separator (117; 117d) der dritten Einzelzelle (116) steht mit einer seiner Seiten in flächigem Kontakt mit der auf dem vierten Leiter (104) angeordneten Elektrode (108d) derdritten Einzelzelle (116) und mit der anderen seiner Seiten in flächigem Kontakt mit der auf dem dritten Leiter (103) angeordneten Elektrode (107d) der dritten Einzelzelle (116).

g. Der gleichfalls als Schicht ausgebildete Separator (117; 117a) der vierten Einzelzelle (113) steht mit einer seiner Seiten in flächigem Kontakt mit der auf dem ersten Leiter (101) angeordneten Elektrode (108a) der vierten Einzelzelle (113) und mit der anderen seiner Seiten in flächigem Kontakt mit der auf dem fünften Leiter (105) angeordneten Elektrode (107a) der vierten Einzelzelle (113).

6. Batterie (100) nach einem der vorhergehenden Ansprüche mit mindestens einem der folgenden zusätzlichen Merkmale:

a. Die elektrischen Leiter (101, 102, 103), die zwei Elektroden (108a und 107b, 108b und 107c, 108c und 107d) elektrisch miteinander verbinden, bilden auf der Oberfläche des jeweiligen Substrats (109a, 109b) eine elektrisch leitende Fläche, die größer ist als die Fläche, welche die elektrisch verbundenen Elektroden (108a und 107b, 108b und 107c, 108c und 107d) auf der Oberfläche einnehmen.

b. Diese elektrisch leitende Fläche und die darüber elektrisch verbundenen Elektroden (108a und 107b, 108b und 107c, 108c und 107d) überlagern in Blickrichtung senkrecht zu den Elektroden und dem Leiter in einem Überlagerungsbereich B, wobei der Überlagerungsbereich B bevorzugt mindestens 80 %, besonders bevorzugt mindestens 90 %, insbesondere 100 % der Fläche der elektrisch verbundenen Elektroden (108a und 107b, 108b und 107c, 108c und 107d) beträgt.

c. Die elektrisch leitende Fläche auf dem jeweiligen Substrat (109a, 109b) umfasst mindestens einen Bereich, der nicht vom Überlagerungsbereich B umfasst ist und in dem keine Überlagerung mit den verbundenen Elektroden (108a und 107b, 108b und 107c, 108c und 107d) besteht.

d. Der Bereich, der nicht von dem Überlagerungsbereich umfasst ist, erstreckt sich über den Spalt (110), der die verbundenen Elektroden (108a und 107b, 108b und 107c, 108c und 107d) voneinander trennt.

7. Batterie (100) nach einem der vorhergehenden Ansprüche mit mindestens einem derfolgenden zusätzlichen Merkmale:

a. Die elektrischen Leiter (104, 105), die nur mit einer der Elektroden (108d, 107a) in elektrischem Kontakt stehen und diese nicht mit einer Elektrode umgekehrter Polarität verbinden, bilden auf der Oberfläche des jeweiligen Substrats (109b) eine elektrisch leitende Fläche, die größer ist als die Fläche, welche die elektrisch kontaktierte Elektrode (108d, 107a) auf der Oberfläche einnimmt.

b. Diese Leiter (104, 105) und die jeweils kontaktierte Elektrode (108d, 107a) überlagern in Blickrichtung senkrecht zu den Elektroden und dem Leiter in einem Überlagerungsbereich C, wobei der Überlagerungsbereich C bevorzugt mindestens 80 %, besonders bevorzugt mindestens 90 %, insbesondere 100 % der Fläche der Elektroden (108d, 107a) beträgt.

8. Batterie (100) nach einem der vorhergehenden Ansprüche mit dem folgenden zusätzlichen Merkmal:

a. Die elektrischen Leiter (101, 102, 103), die zwei Elektroden (108a und 107b, 108b und 107c, 108c und 107d) elektrisch miteinander verbinden, sind zumindest bereichsweise, vorzugsweise über die gesamte Fläche, die sie auf dem jeweiligen Substrat (109a, 109b) einnehmen, als durchgängige elektrisch leitende Schicht ausgebildet.

9. Batterie (100) nach einem der Ansprüche 1 bis 7 mit dem folgenden zusätzlichen Merkmal:

a. Die elektrischen Leiter (101, 102, 103), die zwei Elektroden (108a und 107b, 108b und 107c, 108c und 107d) elektrisch miteinander verbinden, sind zumindest bereichsweise, vorzugsweise über die gesamte Fläche, die sie auf dem jeweiligen Substrat (109a, 109b) einnehmen, aus Linien und /oder Bahnen gebildet, die parallel und/oder in gekreuzter Anordnung ausgerichtet sein können wobei bevorzugt mindestens 10 % und bevorzugt maximal 90 %, weiter bevorzugt maximal 75 %, weiter bevorzugt maximal 50 %, besonders bevorzugt maximal 25 %, der von den jeweiligen elektrischen Leitern eingenommenen Fläche des jeweiligen Substrats von den Linien und / oder Bahnen überdeckt sind.

10. Batterie (100) nach einem der vorhergehenden Ansprüche mit mindestens einem der folgenden zusätzlichen Merkmale:

a. Die Elektroden (107a, 108a, 107b, 108b, 107c, 108c, 107d und 108d) sind rechteckig oder in Form von Streifen ausgebildet.

b. Der Spalt (110) zwischen elektrisch verbundenen Elektroden (108a und 107b, 108b und 107c, 108c und 107d) weist eine im Wesentlichen gleichbleibende Breite auf.

c. Entgegengesetzt gepolte Elektroden der Einzelzellen (113, 114, 115, 116) nehmen auf den Substraten (109a, 109b) jeweils die gleiche Fläche ein.

d. Die elektrisch miteinander verbundenen Elektroden (108a und 107b, 108b und 107c, 108c und 107d) und/oder die elektrisch nicht miteinander Elektroden (107a, 108d) sind jeweils parallel zueinander ausgerichtet.

e. Gleich gepolte Elektroden (107a-d und 108a-d) der Einzelzellen (113, 114, 115, 116) weisen im Wesentlichen identische Dimensionen auf.

f. Die Elektroden (107a-d und 108a-d) weisen

- eine Länge im Bereich von 1 cm bis 25, bevorzugt von 5 cm bis 20 cm, und
- eine Breite im Bereich von 0,5 bis 10 cm, bevorzugt von 1 cm bis 5 cm, auf.

g. Der Spalt (110) weist

- eine Länge im Bereich 1 cm bis 25, bevorzugt von 5 cm bis 20 cm, und
- eine Breite im Bereich von o,1 cm bis 2 cm, bevorzugt von 0,2 cm bis 1 cm, auf.

h. Die elektrischen Leiter weisen eine Dicke im Bereich von 5 $\mu$m bis 250 $\mu$m, bevorzugt von 10 $\mu$m bis 100 $\mu$m, auf.
i. Die Elektroden (107a-d und 108a-d) weisen eine Dicke im Bereich von 10 $\mu$m bis 350 $\mu$m auf.

**11.** Batterie (100) nach einem der vorhergehenden Ansprüche mit mindestens einem der folgenden zusätzlichen Merkmale:

a. Sie umfasstein Gehäuse (118), das die Einzelzellen (113, 114, 115, 116) umschließt und eine erste und eine zweite Gehäuseinnenseite umfasst, wobei das erste Substrat (109a) und das zweite Substrat (109b) Bestandteil des Gehäuses (118) sind und die erste Gehäuseinnenseite eine Oberfläche des ersten Substrats (109a) und die zweite Gehäuseinnenseite eine Oberfläche des zweiten Substrats (109b) ist.
b. Bei dem ersten Substrat (109a) und dem zweiten Substrat (109b) handelt es sich um Folien oder um Bestandteile einer Folie.

**12.** Batterie (100) nach einem der vorhergehenden Ansprüche mit mindestens einem der folgenden zusätzlichen Merkmale:

a. Die Elektroden (107a-d und 108a-d) sind durch ein Druckverfahren gebildet.
b. Die elektrischen Leiter (101, 102, 103, 104, 105) sind durch ein Druckverfahren gebildet.
c. Die Separatoren (117, 117a, 117b, 117c, 117d) sind durch ein Druckverfahren gebildet.

**13.** Batterie (100) nach einem der vorhergehenden Ansprüche mit mindestens einem der folgenden zusätzlichen Merkmale:

a. Die negativen Elektroden (107a, 107b, 107c, 107d) der Einzelzellen (113, 114, 115, 116) umfassen als Elektrodenaktivmaterial partikuläres metallisches Zink oder eine partikuläre metallische Zinklegierung.
b. Die positiven Elektroden (108a, 108b, 108c, 108d) der Einzelzellen (113, 114, 115, 116) umfassen als Elektrodenaktivmaterial ein partikuläres Metalloxid.

**14.** Funketikett (119) umfassend eine Sende- und/oder Empfangseinheit (120) zum Senden und/oder Empfangen von Funksignalen sowie eine Batterie (100) zur Versorgungder Sende- und/oder Empfangseinheit (120) mit einem elektrischen Strom, wobei die Batterie (100) nach einem der vorhergehenden Ansprüche ausgebildet ist.

**15.** Verfahren zur Herstellung einer Batterie (100) gemäß einem der Ansprüche 1 bis 13, **gekennzeichnet durch** die unmittelbar folgenden Schritte a. bis e.:

a. Aufbringen eines ersten elektrischen Leiters (101) und eines dritten elektrischen Leiters (103) auf ein erstes, elektrisch nicht leitendes Substrat (109a) und eines zweiten elektrischen Leiters (102) auf ein zweites, elektrisch nicht leitendes Substrat (109b).
b. Aufbringen einer schichtförmigen ersten negativen Elektrode (107b) unmittelbar auf den ersten elektrischen Leiter (101) und einer schichtförmigen ersten positiven Elektrode (108c) unmittelbar auf den dritten elektrischen Leiter (103).
c. Aufbringen einer schichtförmigen zweiten negativen Elektrode (107c) und einer schichtförmigen zweiten positiven Elektrode (108b) unmittelbar auf den zweiten elektrischen Leiter (102), so dass die zweiten Elektroden (107c, 108b) durch einen Spalt (110) voneinander getrennt sind.
d. Aufbringen eines schichtförmigen Separators (117; 117b) auf die erste negative Elektrode (107b) oder die zweite positive Elektrode (108b) und eines schichtförmigen Separators (117; 117c) auf die zweite negative Elektrode (107c) oder die erste positive Elektrode (108c).
e. Bilden von zwei Schichtstapeln mit der Sequenz

- erste negative Elektrode (107b) / Separator (117; 117b) / zweite positive Elektrode (108b), und
- zweite negative Elektrode (107c) / Separator (117; 117c) / erste positive Elektrode (108c).

**Fig. 1**

**Fig. 2**

**Fig . 3**

**Fig. 4**

**Fig. 5**

*Fig. 6*

Europäisches
Patentamt

European
Patent Office

Office européen
des brevets

## EUROPÄISCHER RECHERCHENBERICHT

Nummer der Anmeldung

EP 21 15 8807

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | KR 2007 0006190 A (ROCKET ELECTRIC CO [KR]) 11. Januar 2007 (2007-01-11) * das ganze Dokument * ----- | 1-15 | INV. H01M6/40 H01M4/04 H01M4/42 |
| X | JP H05 54895 A (SONY CHEMICALS) 5. März 1993 (1993-03-05) * das ganze Dokument * ----- | 1-15 | H01M10/04 H01M50/528 H01M50/46 |
| X | US 10 916 745 B2 (SAMSUNG SDI CO LTD [KR]) 9. Februar 2021 (2021-02-09) * Absätze [0002], [0033], [0066] - [0070]; Abbildung 7 * ----- | 1-12,14, 15 | |
| X | US 2019/237717 A1 (BOUFNICHEL MOHAMED [FR]) 1. August 2019 (2019-08-01) * Absätze [0002], [0044] - [0052], [0054]; Abbildung 3 * ----- | 1-15 | |

**RECHERCHIERTE SACHGEBIETE (IPC)**

H01M

Der vorliegende Recherchenbericht wurde für alle Patentansprüche erstellt

| Recherchenort | Abschlußdatum der Recherche | Prüfer |
|---|---|---|
| München | 7. Juli 2021 | Schmidtbauer, H |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument

........................................................................................
& : Mitglied der gleichen Patentfamilie, übereinstimmendes
   Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 21 15 8807

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-07-2021

| Im Recherchenbericht angeführtes Patentdokument | Datum der Veröffentlichung | Mitglied(er) der Patentfamilie | | Datum der Veröffentlichung |
|---|---|---|---|---|
| KR 20070006190 A | 11-01-2007 | KEINE | | |
| JP H0554895 A | 05-03-1993 | KEINE | | |
| US 10916745 B2 | 09-02-2021 | CN | 106450124 A | 22-02-2017 |
| | | EP | 3128570 A1 | 08-02-2017 |
| | | JP | 6665389 B2 | 13-03-2020 |
| | | JP | 2017033912 A | 09-02-2017 |
| | | KR | 20170017131 A | 15-02-2017 |
| | | US | 2017040582 A1 | 09-02-2017 |
| US 2019237717 A1 | 01-08-2019 | CN | 110098353 A | 06-08-2019 |
| | | CN | 210129524 U | 06-03-2020 |
| | | FR | 3077426 A1 | 02-08-2019 |
| | | US | 2019237717 A1 | 01-08-2019 |

EPO FORM P0461

Für nähere Einzelheiten zu diesem Anhang : siehe Amtsblatt des Europäischen Patentamts, Nr.12/82

**EP 4 047 695 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2019145224 A1
- US 2010081049 A1
- EP 2561564 B1
- EP 3477727 A1
- EP 2960967 B1